(19) Europäisches Patentamt
European Patent Office
Office européen des brevets

(11) **EP 4 535 045 A1**

(12) **EUROPEAN PATENT APPLICATION**

(43) Date of publication:
**09.04.2025 Bulletin 2025/15**

(21) Application number: **23306670.3**

(22) Date of filing: **02.10.2023**

(51) International Patent Classification (IPC):
***G02B 1/115*** (2015.01)

(52) Cooperative Patent Classification (CPC):
**G02B 1/115; G02C 7/104; G02C 7/107**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Essilor International**
**94220 Charenton-Le-Pont (FR)**

(72) Inventors:
• **MAURY, Hélène**
**75011 PARIS (FR)**
• **DING, Xingzhao**
**Singapore 339338 (SG)**

(74) Representative: **Jacobacci Coralis Harle**
**32, rue de l'Arcade**
**75008 Paris (FR)**

(54) **OPTICAL LENS HAVING A NARROW BAND ANTIREFLECTIVE COATING REFLECTING BLUE LIGHT**

(57) The invention relates to an optical lens comprising a substrate and a multilayer antireflective coating disposed on at least one of the main surfaces thereof and comprising a stack of at least one layer with a high refractive index and at least one layer with a low refractive index, the curve of the spectral reflectivity of the multilayer antireflective coating for an angle of incidence in the range of 0° to 15° having a reflection peak centered at a wavelength in the range 435-450 nm and being provided with a maximum reflectivity lower than or equal to 30 %, and a full width at half maximum lower than or equal to 90 nm, and a local minimum of reflectivity located in the range 380-420 nm which is lower than or equal to 2 %, the multilayer antireflective coating providing said at least one main surface with a mean light reflection factor $R_v$ from 380 nm to 780 nm lower than or equal to 2.5 %, an average reflection factor for blue light $R_m^{B1}$ within a wavelength range of from 420 nm to 450 nm, higher than or equal to 15 %, an average reflection factor for blue light $R_m^{B3}$ within a wavelength range of from 440 nm to 460 nm, higher than or equal to 15 %, and a ratio $R_m^{B1}/R_m^{B3}$ lower than or equal to 1 for an angle of incidence in the range of 0° to 15°.

Figure 1

EP 4 535 045 A1

**Description**

The present invention relates to an optical article, in particular an ophthalmic lens, comprising a substrate coated with a highly transparent multilayer antireflection coating, typically a filtering coating, which can be used to reduce the blue light-induced phototoxic effects on the retina of a spectacle wearer, providing in particular protection against blue light emission, and a method of manufacturing such optical article.

Light that is visible to humans extends over a light spectrum ranging from a 380 nanometers (nm) wavelength to a 780 nm wavelength approximately. The part of this spectrum ranging from around 380 nm to around 500 nm corresponds to a high-energy, essentially blue light.

Many studies (see for example Kitchel E., "The effects of blue light on ocular health", Journal of Visual Impairment and Blindness Vol. 94, No. 6, 2000 orGlazer-Hockstein et al., Retina, Vol. 26, No. 1. p 1-4, 2006) suggest that part of the blue light has phototoxic effects on the human eye health, and especially on the retina. Ocular photobiology studies demonstrated that an excessively prolonged or intense exposure to blue light may induce severe ophthalmic diseases such as age-related macular degeneration (ARMD) or cataract.

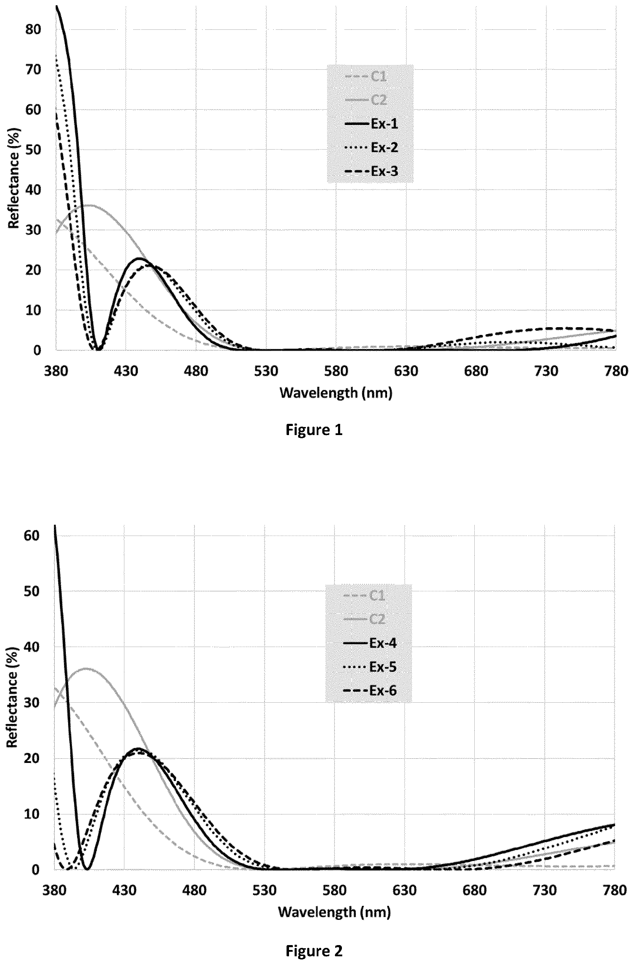

ISO 8980-3 standard (2003) defines at Table B.1 the blue light hazard function B($\lambda$), which relates to the sensitivity of the human eye to low wavelength spectrum emissions. In view of this function shown on figure 2 of WO 2022/258793, it is recommended to limit the exposure of the eyes to blue light potentially harmful, in particular as regards the wavelength band with an increased dangerousness (420-455 nm).

However, part of this blue light, with a wavelength ranging from 465 nm to 495 nm approximately, is good to health since it is implicated in mechanisms for regulating biorhythms, referred to as "circadian cycles".

Eyeglasses are particularly suitable to offer protection against transmission of potentially harmful blue light to the retina. It is furthermore necessary to eliminate as much as possible the harmful influence of ultraviolet light (UV light) on the eye of a wearer of the lens.

Nowadays, with increasing usage of digital devices such as digital screens of computers and smartphones, visual fatigue and discomfort have become much more frequent. Beyond its cumulative effects on visual health, several studies suggest blue light exposure increases glare and visual discomfort. Filtering blue light may notably improve visual function in high glare situations.

Indeed, repeated exposures to artificial light, especially with blue light-emitting digital devices, has been identified as a cause of eyestrain and blurry vision, and contributes to symptoms of visual fatigue, discomfort and haze, since blue light is scattered in the environment and in the eye more than any other kind of visible light, increasing the effort needed to maintain visual focus. This is due to the fact that blue wavelengths of light are shorter wavelengths that are absorbed and scattered more efficiently than longer wavelengths by small particles. According to the Rayleigh scattering theory, the amount of scattering is inversely proportional to the fourth power of the wavelength. Other symptoms include ocular pain, red, dry or irritated eyes, headache, eye heaviness and tiredness, transient or persistent discomfort dependent on the duration of blue light exposure.

There is a growing demand for combining protection against blue-violet light, mainly from daylight, and visual comfort resulting from protection against eye-demanding LED blue light emission from digital devices at around 450 nm. Figure 1 of WO 2022/258793 shows a typical emission spectrum of standard cold LED from a digital device (tablet), with a sharp emission peak around 450 nm.

In order to adapt to the behavioral changes of the past 10 years and increasing digital usages, new filtering optical lenses are required, which would enable to minimize the amount of harmful blue light received by the retina, for long-term retinal protection, and also for better comfort.

Nowadays, special substrates with blue-cut function are commercially available, but blue light absorption by substrates is generally limited up to only 410-420 nm, with very low protection against blue light in the regions 420-450 nm or 440-460 nm.

It has already been suggested, for example in the patent application WO 2008/024414, to cut at least partially the troublesome part of the blue light spectrum from 400 nm to 460 nm, by means of a filter inhibiting the light in a suitable wavelength range, through absorption or through reflection. This can also be done by incorporating a yellow absorbing dye into the optical element.

WO 2013/171434 discloses an ophthalmic lens having a front main face and a back main face, at least one of both main faces comprising a filter, which provides the main face comprising said filter with a good angular selectivity defined by a parameter $\Delta(\theta,\theta')$, an average blue light reflection factor $R_m^{B1}$ within a wavelength range of from 420 nm to 450 nm, which is higher than or equal to 5 %, for an angle of incidence ranging from 0° to 15°, and a spectral reflectivity curve for an angle of incidence ranging from 0° to 15° having a maximum reflectivity at a wavelength of less than 435 nm and full width at half maximum (FWHM) higher than or equal to 80 nm. The coatings disclosed in this application are optimized to provide protection from blue-violet light up to 450 nm by reflection, but they cannot provide sufficient protection against LED blue light emission from digital devices. They reflect light more in the 420-450 nm range than in the 440-460 nm range, and their transmission in the other wavelengths of the visible range is not optimal.

EP 2902817 discloses an optical component comprising a plastic substrate and a multilayer film disposed on at least a rear surface of both surfaces of the plastic substrate, having a maximum reflectivity of 3 % to 50 % in a wavelength range of 380 nm to 780 nm and an average reflectivity of 20 % or less in a wavelength range of 280 nm to 380 nm. Some examples of EP 2902817 exhibit a broad reflection peak around 450 nm (FWHM > 110 nm), extending broadly to longer wavelength in the visible light region, which leads to an undesirable increase of the mean light reflection in the visible range Rv and of the chronobiologic blue light in the 465-495 nm wavelength range. EP 2902817 fails to disclose a lens combining sufficient protection from blue light ($R_m^{B1} \geq 15$ %) and satisfactory antireflection properties in the visible range (Rv $\leq 2.5$ %).

US 2022/179237 discloses a spectacle lens comprising an antireflection coating having a filter effect for blue light in a wavelength range from 430 nm to 530 nm or in a wavelength range from 400 nm to 500 nm, a reflectivity curve having in a wavelength range from 430 nm to 530 nm or in the wavelength range from 400 nm to 500 nm, a reflectivity maximum with a full width at half maximum (FWHM) ranging from 20 nm to $\leq 55$ nm, a transmission from 70% to 100% in a remaining wavelength range of the visible light between 380 nm and 780 nm, the filter effect for blue light being in a range from 5% to 40% in the wavelength range from 400 nm to 500 nm or in the wavelength range from 430 nm to 530 nm. This narrow-band filter has a reflection peak centered at around 464 nm, which represents a major drawback as it significantly overlaps the chronobiological blue light region (465-495 nm). Further, its ability to reflect blue light in the 420-450 nm region is rather limited ($R_m^{B1} < 5$ %), as well as in the 440-460 nm region ($R_m^{B3} < 12$ %), which means that it cannot provide sufficient protection against LED blue light emission from digital devices. This narrow-band filter is in fact more effective in the chronobiological blue light region than in the harmful blue light regions, which is not practically desirable.

CN 108132545 discloses a high-transmittance lens protecting from blue light, comprising on its front side an all-dielectric multilayer film stack with a selective transmission attenuation band characteristic (that is, a high-energy blue light filter band), and on its rear side a wide-band multilayer antireflection film stack in the visible light band. The transmittance in the 420-450 nm region is less than or equal to 80 %, the transmittance in the 465-700 nm region is higher than or equal to 90 %, and the transmittance in the 300-380 nm region is less than or equal to 1 %. However, the blue light filter on the front face comprises 35 alternated layers of $TiO_2/SiO_2$. This 35-layer coating is too complex, not easy to set up and requires high production costs. Moreover, total thickness of this coating is higher than 2000 nm, which is not applicable for plastic substrates.

WO 2022/258793 discloses an optical lens comprising a multilayer antireflection coating providing an average blue light reflection factor $R_m^{B3}$ within a wavelength range of from 440 nm to 460 nm, which is higher than or equal to 15 %, for an angle of incidence ranging from 0° to 15°, and the spectral reflectivity curve of said multilayer antireflection coating for an angle of incidence ranging from 0° to 15° has a reflection peak centered at a wavelength higher than or equal to 330 nm and lower than or equal to 420 nm, a maximum reflectivity lower than or equal to 51 % and a full width at half maximum higher than 70 nm. Although this coating provides satisfactory protection against LED light emitted by digital devices, its aesthetic properties still need to be improved, especially in terms of residual yellow tint color in reflection and yellowness.

The main objective of the present invention to provide an optical lens providing a high level of protection against harmful blue light, a better comfort for the wearer and exhibiting a final color that is well accepted by the customer. Such a lens should also have a high antireflection performance in the visible range while keeping a good transparency (i.e., a high level of transmission in the visible range).

It is an object of the present invention to provide an optical lens, bringing visual benefit in front of LED screens. Such a lens would take the whole light irradiation originating from the surrounding area into account and comprise means capable of reducing the amount of blue light emitted by LED digital devices received by the eye in the wavelength range of from 440 nm to 460 nm, considering the fact that most commercial optical lenses cut less than 10 % of light in this wavelength range, which is not enough to substantiate increased visual comfort.

It is another object of the present invention to provide an optical lens, which enables a good transmission within the wavelength range of from 465 nm to 495 nm, and more generally, wavelengths higher than 465 nm, so as to maintain a good vision for the wearer on one hand, and on the other hand, not to alter the circadian cycles. The difficulty lies in the fact that the wavelength ranges of from 420 nm to 460 nm to be filtered are very close to the wavelength ranges which should not be, or very little, filtered.

It is another object of the present invention to provide an optical lens comprising a reflection filter with the hereabove mentioned properties, which would be easy and economical to implement on the industrial level. Its manufacturing process should be easily integrated into the classical manufacturing chain.

The inventors found that these objectives could be achieved by a coating that is antireflective in the visible range, except in the blue light range where it acts as a blue light reflection filter and reduces the amount of blue light received by the eye in the wavelength range of from 420 nm to 460 nm, to which a specific and unique design has been applied to improve the aesthetic properties of the lens. Indeed, said filtering antireflection coating has been designed to be a narrow-band reflection filter around 435-450 nm. This coating has a narrow reflection peak centered within a blue light wavelength range of from 435 nm to 450 nm, so as to more efficiently reflect light in the 420-450 nm range and the 440-460 nm range for LED blue light protection, while preventing a too high maximum reflectivity of the reflection peak. Meanwhile, $R_m^{B1}$ of this coating (mean reflection in the 420-450 nm range) is controlled to be lower than $R_m^{B3}$ (mean reflection in the 440-460 nm range). This adjustment was necessary so as to effectively minimize the yellowness of the resulting lens.

Moreover, due to the levels of $R_m^{B1}$ and $R_m^{B3}$ factors of the present coating, its reflection chroma is low, resulting in weaker residual reflection color, and consequently improving lens aesthetics.

Thus, the present invention relates to an optical lens comprising:

- a substrate having a front main surface and a rear main surface, and
- a multilayer antireflective coating disposed on at least one of the main surfaces and comprising a stack of at least one layer with a refractive index higher than 1.55 and at least one layer with a refractive index of 1.55 or less, the refractive indices being expressed for a wavelength of 550 nm,

the curve of the spectral reflectivity of the multilayer antireflective coating for an angle of incidence in the range of 0° to 15° having:

- a reflection peak centered at a wavelength higher than or equal to 435 nm and lower than or equal to 450 nm and being provided with a maximum reflectivity lower than or equal to 30 %, and a full width at half maximum lower than or equal to 90 nm, and
- a local minimum of reflectivity located within a wavelength range from 380 nm to 420 nm which is lower than or equal to 2 %,

the multilayer antireflective coating providing said at least one main surface with the following properties:

- a mean light reflection factor $R_v$ from 380 nm to 780 nm, defined according to the ISO 13666:1998 standard, lower than or equal to 2.5 %, for an angle of incidence in the range of 0° to 15°,
- an average reflection factor for blue light $R_m^{B1}$ within a wavelength range of from 420 nm to 450 nm, higher than or equal to 15 %, for an angle of incidence in the range of 0° to 15°,
- an average reflection factor for blue light $R_m^{B3}$ within a wavelength range of from 440 nm to 460 nm, higher than or equal to 15 %, for an angle of incidence in the range of 0° to 15°, and
- a ratio $R_m^{B1}/R_m^{B3}$ lower than or equal to 1 for an angle of incidence in the range of 0° to 15°.

The present invention provides new antireflection coatings designed to provide more effective protection against harmful blue light from 400 to 460 nm, while increasing visual comfort and decreasing eyestrain favored by a prolonged usage of LED-based digital devices. They have a good antireflection efficiency, i.e., a low mean light reflection factors $R_v$, which ensures high clarity of the resulting coated lenses, combined with an improved blue light cutting efficiency in the 440-460 nm wavelength range (LED light region), an improved blue light cutting efficiency in the 420-450 nm wavelength range, and in general a satisfactory transmission of chronobiologic blue light in the 465-495 nm wavelength range. These coatings can in particular be applied on blue-cut substrates for enhancing LED blue light protection.

An advantage of the present filtering coating as compared to classical narrow-band reflection filters is its limited number of layers, typically lower than or equal to 14 and preferably ranging from 7 to 11. Typical narrow band reflection filters require more than 15 layers to keep a low reflection in the visible range.

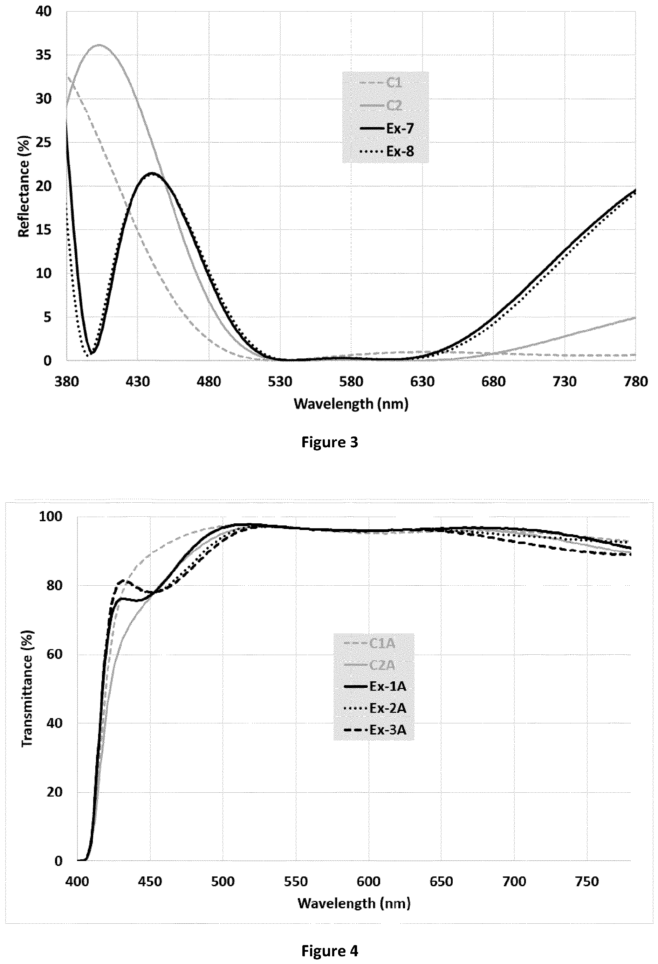

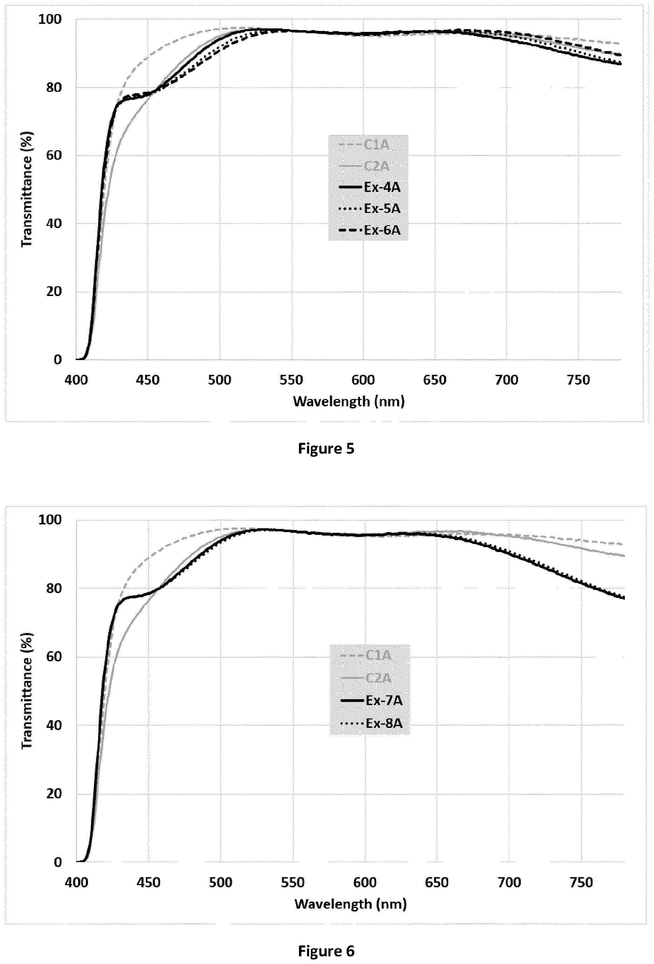

The foregoing and other objects, features and advantages of the present invention will become readily apparent to those skilled in the art from a reading of the detailed description hereafter when considered in conjunction with the accompanying drawings, wherein figures 1-3 depict reflection curves between 380 nm and 780 nm for the filtering antireflection coatings present on the front main face of the lenses of examples 1-8 and comparative examples 1-2 described in the experimental part, for an angle of incidence of 15°, and figures 4-6 depict transmission curves between 400 nm and 750 nm for the optical lenses of examples 1A-8A and comparative examples 1A-2A described in the experimental part, for an angle of incidence of 0°.

<u>Detailed description of the invention</u>

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about".

When an optical article comprises one or more surface coatings, the phrase "to deposit a coating or layer onto the optical article" means that a coating or layer is deposited onto the outermost coating of the optical article, i.e., the coating that is the closest to the air.

In the present application, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coatings may be arranged between the substrate/coating and the coating in question (however, it is preferably in contact with said substrate/coating), and (iii) does not necessarily completely cover the substrate/coating. When "a layer 1 is arranged under a layer 2", it is intended to mean that layer 2 is more distant from the substrate than layer 1.

The term "coating" is understood to mean any layer, layer stack or film, which may be in contact with the substrate and/or with another coating, for example a sol-gel coating or a coating made of a purely organic resin. A coating may be deposited or formed through various methods, including wet processing, gaseous processing, and film transfer.

In the present application, a layer based on a material is defined as a layer comprising at least 80 % by weight of said material, more preferably at least 90 % by weight of said material, even better consisting of a layer of said material. For example, a $ZrO_2$-based layer comprises at least 80 % by weight of $ZrO_2$.

The optical article prepared according to the present invention is a transparent optical article, preferably an optical lens or lens blank, and more preferably an ophthalmic lens or lens blank. Said ophthalmic lens may be a polarized lens, or a solar, tinted lens, with a corrective action or not.

The optical article may be coated on its convex main face (front side), concave main face (back/rear side), or both faces with the multilayer antireflection coating according to the invention, preferably on the convex (front) main face, so as to avoid multiple reflections of light arriving on the lens. As used herein, the rear face of the substrate is intended to mean the face which, when using the article, is the nearest from the wearer's eye, in the cases of ophthalmic lenses. It is generally a concave face. On the contrary, the front face of the substrate is the face which, when using the article, is the most distant from the wearer's eye. It is generally a convex face. The optical article can also be a plano article.

In an embodiment, the optical lens according to the invention is coated on both faces (front and rear main faces) with antireflection coatings according to the invention. The coatings may be identical or different.

In another embodiment, the main face coated with the reflection filter according to the invention is the front main face of the lens and the back main face is coated with a classical antireflection coating or preferably an antireflection coating with a low reflection in the UV region, such as those described in WO 2012/076714.

Herein, the term "lens" means an organic or inorganic glass lens, comprising a lens substrate, which may be coated with one or more coatings of various natures.

The term "ophthalmic lens" is used to mean a lens adapted to a spectacle frame, for example to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, etc.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more coatings or layers.

The substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39® from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC), diethylene glycol bis(allylcarbonate) polymers and substrates obtained from thermosetting polythiourethane resins, which are marketed by the Mitsui Toatsu Chemicals company as MR series, in particular MR-6®, MR-7® and MR-8® resins. The latter substrates as well as the monomers used for their preparation are especially described in the patents US 4,689,387, US 4,775,733, US 5,059,673, US 5,087,758 and US 5,191,055.

Prior to depositing the antireflection coating or other functional coatings, the surface of the article is usually submitted to a physical or chemical surface activating and cleaning pre-treatment, so as to improve the adhesion of the layer to be deposited, such as disclosed in WO 2013/013929. This pre-treatment is generally performed on the surface of an abrasion- and/or scratch-resistant coating (hard coat).

This pre-treatment is generally carried out under vacuum. It may be a bombardment with energetic species, for example an ion beam method ("Ion Pre-Cleaning" or "IPC") or an electron beam method, a corona treatment, an ion spallation treatment, an ultraviolet treatment or a plasma treatment under vacuum, using typically an oxygen or an argon plasma. It may also be an acid or a base surface treatment and/or a solvent surface treatment (using water or an organic solvent) with or without ultrasonic treatment. Many treatments may be combined. Thanks to these cleaning treatments, the cleanliness of the substrate surface is optimized.

By energetic species, it is meant species with an energy ranging from 1 to 300 eV, preferably from 1 to 150 eV, and more preferably from 10 to 150 eV and most preferably from 40 to 150 eV. Energetic species may be chemical species such as ions, radicals, or species such as photons or electrons.

Antireflection coatings are conventionally used in the field of optics, in particular ophthalmic optics. An antireflection coating is a coating, deposited on the surface of an article, which improves the antireflection properties of the final article. It reduces the reflection of light at the article/air interface over a relatively broad portion of the visible spectrum. The optical properties of such coatings, such as for example reflectivity, result from interferences due to the multiple reflections at the air / layer and substrate / layer interfaces.

The present antireflection coating is configured to inhibit transmission of at least part of blue light in a selected range of wavelengths, by reflection. Thus, it represents a "blue cut filter" and is useful for protection purposes. By reflection of light in a selected range of wavelengths, potentially harmful light will not reach the eyes of a wearer. This is particularly the case for blue light in the range 420 nm - 450 nm, and/or in the range 440 nm - 460 nm, which are harmful for retina.

As used herein, a means reflects a selected wavelength range if it inhibits at least some transmission within the range by reflection, while having little or no effect on reflection of wavelengths neighboring the wavelength range.

The multilayer antireflection coating of the invention comprises a stack of at least one high refractive index layer having a refractive index higher than 1.55 and at least one low refractive index layer having a refractive index of 1.55 or less.

More preferably, it comprises at least two layers (LI) with a low refractive index and at least two layers (HI) with a high refractive index. It preferably comprises at least three layers (HI) with a high refractive index. The total number of layers in the antireflection coating is preferably higher than or equal to 3, more preferably higher than or equal to 4 or 5. It is preferably lower than or equal to 14, 12 or 11. In one embodiment, it ranges from 4 to 12 and, more preferably from 7 to 11. The present narrow band filter has not so many layers, and, as a consequence, is easier and cheaper to produce than highly selective filters are typically composed of an overall thick stack and/or comprising a very high number of dielectric layers.

The inventors found that when using a higher number of layers in the antireflection coating, it becomes easier to design coatings having high $R_m^{B1}$ and $R_m^{B3}$ reflection factors, low $R_v$ and $R_m^{B2}$ factors, with a reflection peak in the 435-450 nm range having a lower FWHM. In other words, to achieve the same level of $R_m^{B3}$, the antireflection coatings having a higher number of layers can be designed with a lower $R_v$, a lower $R_m^{B2}$ and a higher $R_m^{B1}$. The various reflection factors are defined hereunder.

As used herein, a layer of the antireflection coating is defined as having a thickness higher than or equal to 1 nm. Thus, any layer having a thickness lower than 1 nm will not be considered when counting the number of layers in the antireflection coating. The optional sub-layer and layers lying below the sub-layer either are not considered when counting the number of layers of the antireflection coating or when indicating its thickness.

HI layers and LI layers do not necessarily alternate with each other in the stack, although they also may, according to one embodiment of the invention. Two HI layers (or more) may be deposited onto each other, as well as two LI layers (or more) may be deposited onto each other.

In the present application, a layer of the antireflection coating is said to be a layer with a high refractive index (HI) when its refractive index is higher than 1.55, preferably higher than or equal to 1.6, even more preferably higher than or equal to 1.8 or 1.9 and most preferably higher than or equal to 2. Said HI layers preferably have a refractive index lower than or equal to 2.2 or 2.1. A layer of an antireflection coating is said to be a low refractive index layer (LI) when its refractive index is lower than or equal to 1.55, preferably lower than or equal to 1.52, more preferably lower than or equal to 1.48 or 1.47. Said LI layer preferably has a refractive index higher than or equal to 1.1.

The HI layer generally comprises one or more metal oxides such as, without limitation, zirconia ($ZrO_2$), titanium oxide such as titanium dioxide ($TiO_2$), alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), $La_2O_3$, $Nb_2O_5$, $Y_2O_3$.

Optionally, the HI layers may further contain silica or other materials with a low refractive index, provided they have a refractive index higher than 1.55 as indicated hereabove. The preferred materials include $ZrO_2$, $PrTiOs$, $Nb_2O_5$, $Ta_2O_5$, $Y_2O_3$ and mixtures thereof.

The most preferred materials are $TiO_2$ and $Ta_2O_5$. In comparison with other materials such as $ZrO_2$, antireflection

coatings using $TiO_2$ or $Ta_2O_5$ as a high refractive index material are thinner (for stacks with the same number of layers). Further, to achieve the same level of $R_m^{B3}$, the antireflection coatings using $TiO_2$ or $Ta_2O_5$ as a high refractive index material can be designed with a lower $R_v$ and a lower $R_m^{B2}$. The various reflection factors are defined hereunder.

The LI layer is also well known and may comprise, without limitation, $SiO_2$, $MgF_2$, $ZrF_4$, $AlF_3$, $Na_5Al_3F_{14}$, $Na_3[AlF_6]$, or a mixture of silica and alumina, especially silica doped with alumina, the latter contributing to increase the antireflection coating thermal resistance. The LI layer is preferably a layer comprising at least 80 % by weight of silica, more preferably at least 90 % by weight of silica, relative to the layer total weight, and even more preferably consists in a silica layer.

Optionally, the LI layers may further contain materials with a high refractive index, provided the refractive index of the resulting layer is lower than or equal to 1.55.

The antireflection coating external (outermost) layer, i.e., its layer that is the furthest from the substrate, is generally a low refractive index layer having a refractive index of 1.55 or less and a thickness preferably higher than or equal to 100 nm. It may be a silica-based layer, comprising at least 80 % by weight of silica, more preferably at least 90 % by weight of silica (for example a silica layer doped with alumina), relative to the layer total weight, and even more preferably consists of a silica layer.

The antireflection coating innermost layer, i.e., its layer that is in direct contact with the sub-layer (when present) or the substrate, is preferably a high refractive index layer.

Generally, the HI and/or LI layers have a physical thickness ranging from 5 nm to 150 nm, preferably from 8 nm to 120 nm. Their thickness may vary to a large extent, depending for instance on the desired properties for the layer, on the layer material, on the deposition technique and/or on the layer position in the stack.

Generally, the total thickness of the antireflection coating is lower than or equal to 1 $\mu$m, preferably lower than or equal to 800 nm, more preferably lower than or equal to 700 nm and even more preferably lower than or equal to 650, 600 or 500 nm. The antireflection coating total thickness is generally higher than or equal to 100 nm, preferably higher than or equal to 150 or 200 nm. in one embodiment, it ranges from 200 nm to 700 nm, more preferably from 250 nm to 560 nm.

In particular embodiments of the invention, the antireflection coating comprises 7 to 11 layers, and has a total thickness preferably ranging from 350 nm to 600 nm.

Moreover, the optical article has a good resistance to heat and temperature variations, i.e., a high critical temperature. In the present patent application, the critical temperature of an article is defined as being the temperature starting from which cracks appear in a coating present at the surface of the substrate (on either main face), which results in degradation of the coating, generally the antireflection coating. The critical temperature of an article coated according to the invention is preferably $\geq$ 70°C, more preferably $\geq$ 75°C, 80°C, 90°C, 100°C or 110°C.

It is possible to define a $R_{T1}$ ratio, which is slightly different from the $R_T$ ratio defined in US 7692855:

$$R_{T1} = \frac{\text{sum of the physical thicknesses of the low refractive index layers of the interferential coating}}{\text{sum of the physical thicknesses of the high refractive index layers of the interferential coating}}$$

Only layers of the interferential coating are taken into account for the calculation of said ratio $R_{T1}$, i.e., only the layers located above the optional sub-layer.

In one embodiment $R_{T1}$ is higher than or equal to 1 preferably higher than or equal to 1.1, 1.2, 1.3, 1.45, 1.46, 1.47, 1.48, 1.5, 1.6, 1.7 or 1.8. In one embodiment, $R_{T1}$ is lower than or equal to 2.5, preferably lower than or equal to 2. It is preferable to have a high $R_{T1}$ ratio, in order to have an article showing a higher critical temperature, while exhibiting at the same time high abrasion resistance.

In the present invention, the multilayer antireflection coating can be deposited onto a monolayer sub-layer having a thickness higher than or equal to 120 nm. It should be noted that such sub-layer does not belong to the antireflection coating. Said sub-layer in preferably in direct contact with the antireflection coating.

As used herein, an antireflection coating sub-layer or adhesion layer is intended to mean a relatively thick coating, used in order to improve mechanical properties such as abrasion resistance and/or scratch resistance of the antireflection coating and/or so as to reinforce its adhesion to the substrate or to the underlying coating.

The sub-layer has a thickness that is generally lower than or equal to any one of the following values: 600 nm, 500 nm, 450 nm, 400 nm, 375 nm, 300 nm, 250 nm. The sub-layer has a thickness that is higher than or equal to 120 nm, preferably higher than or equal to 125, 130, 140, 150, 160 or 180 nm. Increasing the thickness of the sub-layer leads to an abrasion resistance improvement, but preferably not to the point where a light absorption could occur, which, depending on the nature of the sub-layer, could significantly reduce the visual transmission factor $T_v$.

The sub-layer is preferably a $SiO_2$-based layer, this layer comprising preferably at least 80 % by weight of silica, more preferably at least 90 % by weight of silica, relative to the layer total weight, and even more preferably consists of a silica layer. In another embodiment, this $SiO_2$-based layer is a silica layer doped with alumina, in amounts such as defined hereabove, preferably consists of a silica layer doped with alumina.

A sub-layer of an antireflection coating is a category of layer that is well-identifiable and well-known to those of ordinary skill in the art, and cannot be confused with an abrasion-resistant and/or scratch-resistant coating (hard coat), described later in the present application.

It is preferred to use a sub-layer of the monolayer type. However, the sub-layer may be laminated (multilayer), especially when the sub-layer and the underlying coating (or the substrate, should the sub-layer be directly deposited onto the substrate) have a substantial refractive index difference. This is especially true when the underlying coating, which is generally an abrasion-resistant coating and/or a scratch-resistant coating, or the substrate, have a high refractive index, in other words a refractive index higher than or equal to 1.55, preferably higher than or equal to 1.57.

In such an event, the sub-layer may comprise, in addition to a layer having a thickness generally higher than or equal to 120 nm, which is referred to as the main layer, preferably at most two or three other layers ("impedance layers"), interleaved in between the optionally coated substrate and said main layer, which is generally a layer based on silica. Such additional layers are preferably thin layers, the function of which is to limit the multiple reflections at the sub-layer / underlying coating interface or at the interface sub-layer / substrate interface, whichever applies.

A multilayered sub-layer comprises preferably, in addition to the main layer, a layer with a high refractive index and with a thickness lower than or equal to 80 nm, more preferably lower than or equal to 50 nm and even more preferably lower than or equal to 30 nm. This layer with a high refractive index does directly contact the substrate with a high refractive index or the underlying coating with a high refractive index, whichever applies. Of course, this embodiment may be used even if the substrate (or the underlying coating) has a refractive index of less than 1.55.

As an alternative, the sub-layer comprises, in addition to the main layer and the previously mentioned layer with a high refractive index, a layer of material with a refractive index lower than or equal to 1.55, 1.52 or 1.5 based on $SiO_2$ (that is to say comprising preferably at least 80 % by weight of silica) with a thickness preferably lower than or equal to 80 nm, more preferably lower than or equal to 50 nm and even more preferably lower than or equal to 30 nm, onto which is deposited said high refractive index layer. Typically, in this case, the sub-layer comprises, deposited in this order onto the optionally coated substrate, a 25 nm-thick layer of $SiO_2$, a 10 nm-thick layer of $ZrO_2$ or $Ta_2O_5$ and the sub-layer main layer.

Optionally, the exposed surface of the sub-layer, when present, may be submitted, prior to depositing the first layer of the antireflection coating, to a physical or a chemical activation treatment which may be selected from the pre-treatments the substrate may undergo prior to depositing the sub-layer and which have already been mentioned hereabove. The preferred pre-treatment is an ion bombardment, for example by using an ion gun-generated argon ion beam. Such physical or chemical activation treatments (preferably an ionic bombardment treatment) may also be performed on the exposed surface of one or more layer(s) of the multilayer antireflection coating, prior to depositing the subsequent layer of said multilayer antireflection coating.

The optical article of the invention may be made antistatic, that is to say not to retain and/or develop a substantial static charge, by incorporating at least one electrically conductive layer into the stack present on the surface of the article, preferably in the antireflection coating.

The ability for a lens to evacuate a static charge obtained after rubbing with a piece of cloth or using any other procedure to generate a static charge (charge applied by corona...) may be quantified by measuring the time it takes for said charge to dissipate. Thus, antistatic lenses have a discharge time of about a few hundred milliseconds, preferably 500 ms or less, whereas it is of about several tens of seconds for a static lens. In the present application, discharge times are measured according to the method exposed in the French application FR 2943798.

As used herein, an "electrically conductive layer" or an "antistatic layer" is intended to mean a layer which, due to its presence on the surface of a substrate, decreases the ability of the optical article to attract dust/particles due to charge accumulation. Preferably, when applied onto a non-antistatic substrate (i.e., having a discharge time higher than 500 ms), the antistatic layer enables the optical article not to retain and/or develop a substantial static charge, for example to have a discharge time of 500 ms or less after a static charge has been applied onto the surface thereof, so that small dust is prevented from adhering to the optical article due to prevention of static effects.

The electrically conductive layer may be located at various places in the stack, generally in or in contact with the antireflection coating, provided that the reflective or antireflective properties thereof are not affected. It is preferably located between two layers of the antireflection coating, and/or is preferably adjacent to a layer with a high refractive index of such antireflection coating. In an embodiment, the electrically conductive layer is located immediately under a layer with a low refractive index of the antireflection coating, most preferably is located in penultimate position of the antireflection coating in the direction moving away from the substrate, immediately under the LI external layer of the antireflection coating.

The electrically conductive layer should be thin enough not to alter the transparency of the antireflection coating. The electrically conductive layer is preferably made from an electrically conductive and highly transparent material, generally an optionally doped metal oxide. In this case, the thickness thereof preferably ranges from 1 to 50 nm, more preferably from 1 to 30 nm, 1 to 15 nm or 1 to 10 nm, ideally from 2 to 8 nm. Preferably, the electrically conductive layer comprises an optionally doped metal oxide, selected from indium, tin, zinc oxides and mixtures thereof. Indium-tin oxide ($In_2O_3$:Sn, tin-doped indium oxide), aluminum-doped zinc oxide (ZnO:Al), indium oxide ($In_2O_3$) and tin oxide ($SnO_2$) are preferred. In a most preferred embodiment, the electrically conductive and optically transparent layer is an indium-tin oxide layer, noted ITO layer or a $SnO_2$ layer.

Generally, the electrically conductive layer contributes, within the stack, but in a limited manner when it has a low thickness, to obtaining antireflection properties and typically represents a layer with a high refractive index in said coating.

The electrically conductive layer may be deposited according to any suitable method, for example by vacuum evaporation deposition, preferably ion-beam-assisted (IAD, described below) to increase its transparence, or by means of cathode sputtering.

The electrically conductive layer may also be a very thin layer of a noble metal (Ag, Au, Pt, etc.) typically smaller than 1 nm in thickness and preferably less than 0.5 nm in thickness.

The various layers of the antireflection coating, the sub-layer, when present, are preferably deposited by vapor phase deposition, under vacuum, according to any of the following methods: i) by evaporation, optionally under ion beam assistance; ii) by ion-beam spraying; iii) by cathode sputtering; iv) by plasma-assisted chemical vapor deposition. These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

A treatment step with energetic species such as previously defined may also be carried out, simultaneously whilst depositing one or more of the various layers of the antireflection coating, or sub-layer. In particular, working under ion assistance enables to pack said layers while they are being formed, and increases their compression and refractive index. The use of ion assistance during the deposition of a layer produces a layer that is structurally different from a layer deposited without ion assistance.

The ion assisted deposition method or IAD is notably described in US patent application 2006/017011 and in US patent 5268781. Vapor phase deposition under ion assistance comprises depositing onto a substrate a layer of material by simultaneously bombarding by means of an ion beam said layer while it is being formed, and preferably under ion bombardment achieved by means of an ion gun. The ion bombardment leads to an atomic rearrangement in the coating being formed, which increases its density. The IAD not only allows an improvement of the deposited layer adhesion, but also an increase in their refractive index. The IAD operation may be performed by means of an ion gun, where ions are particles composed of gas atoms from which one or more electron(s) is or are extracted. It does preferably consist of bombarding the surface to be treated with oxygen ions. Other ionized gases may be used, either combined with oxygen, or not, for example argon, nitrogen, in particular a mixture of $O_2$ and argon according to a volume ratio ranging from 2:1 to 1:2. Preferred IAD treatments for the deposition of thin layers according to the present invention are disclosed in WO 2020/104392.

According to a particularly preferred embodiment, the optical lens comprises, starting from the surface of the substrate optionally coated with one or more functional coatings such as a primer coating and/or a hard coat, optionally a sub-layer having a thickness of from 100 to 300 nm, more preferably from 110 to 250 nm, even more preferably from 120 to 225 nm, preferably a silica-based sub-layer, and an antireflection coating, containing in the following order, a high refractive index with a thickness of from 25 to 70 nm, preferably of from 30 to 65 nm, a layer with a low refractive index with a thickness of from 20 to 45 nm, preferably of from 25 to 40 nm, preferably of silica, a layer with a high refractive index with a thickness of from 40 to 60 nm, preferably of from 45 to 55 nm, a layer with a low refractive index with a thickness of from 25 to 80 nm, preferably of from 30 to 75 nm, preferably of silica, a high refractive index with a thickness of from 10 to 35 nm, preferably of from 15 to 30 nm, a layer with a low refractive index with a thickness of from 35 to 60 nm, preferably of from 40 to 55 nm, preferably of silica, optionally an electrically conductive layer with a thickness of from 3 to 15 nm, preferably of from 4 to 8 nm, preferably made of tin oxide or ITO, and a layer with a low refractive index with a thickness of from 100 to 140 nm, preferably of from 110 to 130 nm, preferably of silica.

The antireflection coating / sub-layer (optional) system may be deposited directly onto a bare substrate. In some applications, it is preferred that the main surface of the substrate be coated with one or more functional coatings improving its optical and/or mechanical properties, prior to depositing the antireflection coating of the invention. These functional coatings traditionally used in optics may be, without limitation, an impact-resistant primer layer, an abrasion- and/or scratch-resistant coating (hard coat), a polarized coating, an antistatic coating, a photochromic coating, a tinted coating or a stack made of two or more of such coatings.

The impact-resistant primer coating which may be used in the present invention can be any coating typically used for improving impact resistance of a finished optical article. By definition, an impact-resistant primer coating is a coating which improves the impact resistance of the finished optical article as compared with the same optical article but without the impact-resistant primer coating.

Typical impact-resistant primer coatings are (meth)acrylic-based coatings and polyurethane-based coatings. In particular, the impact-resistant primer coating according to the invention can be made from a latex composition such as a poly(meth)acrylic latex, a polyurethane latex or a polyester latex.

Preferred primer compositions include compositions based on thermoplastic polyurethanes, such as those described in the patents JP 63-141001 and JP 63-87223, poly(meth)acrylic primer compositions, such as those described in the patents US 5,015,523 and US 6,503,631, compositions based on thermosetting polyurethanes, such as those described in the patent EP 0404111 and compositions based on poly(meth)acrylic latexes or polyurethane latexes, such as those described in the patents US 5,316,791 and EP 0680492. Preferred primer compositions are compositions based on polyurethanes and compositions based on latexes, in particular polyurethane latexes, poly(meth)acrylic latexes and polyester latexes, as well as their combinations. In one embodiment, the impact-resistant primer comprises colloidal fillers.

Poly(meth)acrylic latexes are latexes based on copolymers essentially made of a (meth)acrylate, such as for example ethyl (meth)acrylate, butyl (meth)acrylate, methoxyethyl (meth)acrylate or ethoxyethyl (meth)acrylate, with at least one other co-monomer in a typically lower amount, such as for example styrene.

Commercially available primer compositions suitable for use in the invention include the Witcobond® 232, Witcobond® 234, Witcobond® 240, Witcobond® 242 compositions (marketed by BAXENDEN CHEMICALS), Neorez® R-962, Neorez® R-972, Neorez® R-986 and Neorez® R-9603 (marketed by ZENECA RESINS), and Neocryl® A-639 (marketed by DSM coating resins).

The thickness of the impact-resistant primer coating, after curing, typically ranges from 0.05 to 30 $\mu$m, preferably 0.2 to 20 $\mu$m and more particularly from 0.5 to 10 $\mu$m, and even better 0.6 to 5 $\mu$m or 0.6 to 3 $\mu$m, and most preferably 0.8 to 1.5 $\mu$m.

The impact-resistant primer coating is preferably in direct contact with an abrasion- and/or scratch-resistant coating. In one embodiment, its refractive index ranges from 1.45 to 1.55. In another embodiment, its refractive index is higher than or equal to 1.55.

The abrasion- and/or scratch-resistant coating may be any layer traditionally used as an anti-abrasion and/or anti-scratch coating in the field of optical lenses.

The abrasion- and/or scratch-resistant coatings are preferably hard coatings based on poly(meth)acrylates or silanes, generally comprising one or more mineral fillers intended to increase the hardness and/or the refractive index of the coating once cured.

Abrasion- and/or scratch-resistant coatings are preferably prepared from compositions comprising at least one alkoxysilane and/or a hydrolyzate thereof, obtained for example through hydrolysis with a hydrochloric acid solution and optionally condensation and/or curing catalysts.

Suitable coatings that are recommended for the present invention include coatings based on epoxysilane hydrolyzates such as those described in the patents EP 0614957, US 4211823 and US 5015523.

A preferred abrasion- and/or scratch-resistant coating composition is the one disclosed in the patent EP 0614957, in the name of the applicant. It comprises a hydrolyzate of epoxy trialkoxysilane and dialkyl dialkoxysilane, colloidal silica and a catalytic amount of an aluminum-based curing catalyst such as aluminum acetylacetonate, the rest being essentially composed of solvents traditionally used for formulating such compositions. Preferably, the hydrolyzate used is a hydrolyzate of $\gamma$-glycidoxypropyltrimethoxysilane (GLYMO) and dimethyldiethoxysilane (DMDES).

The abrasion- and/or scratch-resistant coating composition may be deposited by known methods and is then cured, preferably using heat or ultraviolet radiation. The thickness of the (cured) abrasion- and/or scratch-resistant coating does generally vary from 2 to 10 $\mu$m, preferably from 3 to 5 $\mu$m.

The optical article according to the invention may also comprise coatings formed on the antireflection coating and capable of modifying the surface properties thereof, such as a hydrophobic and/or oleophobic coating (antifouling top coat). These coatings are preferably deposited onto the outer layer of the antireflection coating. Generally, their thickness is lower than or equal to 10 nm, does preferably range from 1 to 10 nm, more preferably from 1 to 5 nm. Antifouling top coats are generally coatings of the fluorosilane or fluorosilazane type, preferably comprising fluoropolyether moieties and more preferably perfluoropolyether moieties. More detailed information on these coatings is disclosed in WO 2012/076714.

Instead of a hydrophobic coating, a hydrophilic coating may be used which provides anti-fog properties (anti-fog coating), or a precursor of an anti-fog coating which provides anti-fog properties when associated with a surfactant. Examples of such anti-fog precursor coatings are described in the patent application WO 2011/080472.

The additional coatings such as primers, hard coats and antifouling top coats may be deposited onto a main face of the substrate using methods known in the art, including spin-coating, dip-coating, spray-coating, evaporation, sputtering, chemical vapor deposition and lamination.

Typically, an optical article according to the invention comprises a substrate that is successively coated with an impact-resistant primer layer, an abrasion-resistant and/or scratch-resistant layer, an optional sub-layer, an antireflection coating according to the invention, and a hydrophobic and/or oleophobic coating, or a hydrophilic coating which provides antifog properties, or an anti-fog precursor coating.

In one embodiment, the antireflection coating and the optional sub-layer are applied on the front main face of the lens and/or the rear main face of the lens, preferably the front main face of the lens.

In another embodiment, the antireflection coating and the optional sub-layer are applied on the front main face of the lens (or the back main face), and the back main face of the lens (or the front main face) is coated with an antireflection coating, which is identical to or different from the antireflection coating of the other face, optionally with a sub-layer, which is identical to or different from the sub-layer of the other face, and optionally with an impact resistant primer coating and/or an abrasion- and/or scratch-resistant coating, which are identical to or different from those of the other face. Obviously, the layers of the back face are stacked in an order that is similar to the front face.

The present antireflection coating is a filter for at least part of the blue light, working by reflection of said light. Thus, an optical lens of the invention, provided with this reflection filter, reduces the phototoxic blue light global transmission to the retina of a user wearing such an optical lens by at least partially blocking its transmission.

The antireflection coating according to the invention shows a reflection band in the UV-blue-violet range of light, so as to reflect and thus inhibit transmission of high energy visible light and near UV light, and in particular harmful blue light (400-455 nm), especially in the range 420 nm - 455 nm and 420-450 nm). This is particularly interesting when the coating is positioned on the front face of the lens.

The reflection properties of blue light, typically in the 440-460 nm range or the 420-450 nm range, can be provided to the optical lens by a single antireflection coating according to the invention present on at least one of its main faces, preferably the front main face, or by two identical or different antireflection coatings according to the invention present on both main faces of the lens, or by one antireflection coating according to the invention present on one main face and another coating not according to the invention present on the other main face. In the two latter cases, both antireflection coatings on the main faces of the lens contribute to reflecting harmful blue light and transmitting visible light at other wavelengths. Preferably, the antireflection coating that is the most efficient in terms of reflecting blue light ($R_m^{B3}$), if different antireflection coatings are used on both main faces, is present on the front main face.

The antireflection coating according to the invention at least partially reflects blue light around 450 nm and thus efficiently prevents transmission of harmful blue light over a spectral range including the 440-460 nm range corresponding to LED light emission by digital devices, which is a range that is generally overlooked by most prior art blue light reflection filters, which are generally only efficient in the 420-450 nm range.

The multilayer antireflection coating provides the at least one main face of the lens onto which it is deposited with an average (or mean) blue light reflection factor $R_m^{B3}$ within a wavelength range of from 440 nm to 460 nm that is higher than or equal to 15 %, for an angle of incidence on the main face comprising the filter ranging from 0° to 15°, preferably 15°. It is defined by the formula:

$$R_m^{B3} = \frac{\int_{440}^{460} R(\lambda)d\lambda}{460-440}$$

wherein $R(\lambda)$ represents the reflection factor at a given wavelength $\lambda$. $R_m^{B3}$ is defined for a specific angle of incidence, based on $R(\lambda)$ measured at the same angle of incidence.

The mean reflection factor $R_m^{B3}$ as defined above is preferably higher than or equal to any one of the following values: 17, 18, 19, 20 %. Ideally, the mean reflection factor $R_m^{B3}$ is lower than or equal to 22 %, and/or ranges from 18 to 21 %, preferably at 15° incident angle.

The present filter is especially designed to maximize the average blue light reflection factor $R_m^{B3}$. This makes it possible to maximize the rejection of blue light, within the wavelength range of from 440 nm to 460 nm, directly arriving on the front main face of the lens, by depositing the filter preferably on said front face, and thus to increase visual comfort and decrease eyestrain favored by a prolonged usage of LED-based digital devices.

It is considered herein that the major part of the direct light originating from the front of a lens wearer and reaching the retina of the same has a low incidence on the front main face, generally ranging from 0° to 15°.

Unless otherwise specified, transmittances and reflection factors are an average of light transmitted or reflected within the range that is not weighted according to the sensitivity of the eye at each wavelength of the range.

The angle of incidence is classically defined as the angle between the perpendicular to the surface at the point of incidence and the direction of the light beam striking this surface.

In one of its aspects, the present invention is aimed at using the optical lens of the invention to prevent diseases related to blue light-induced phototoxicity (day light and LED light), to reduce the risks of occurrence of an ophthalmic disease due to a degenerative process related to the phototoxic blue light, or to protect against the blue light-induced phototoxicity at least part of the wearer's eye, in particular against a degenerative process such as age-related macular degeneration (ARMD). An optical lens such as described herein does also advantageously provide the wearer with an improved visual contrast.

The multilayer antireflection coating provides the at least one main face of the lens onto which it is deposited with an average (or mean) blue light reflection factor $R_m^{B1}$ within a wavelength range of from 420 nm to 450 nm that is higher than or equal to 15 %, for an angle of incidence on the main face comprising the filter ranging from 0° (normal incidence) to 15°, preferably 15°. It is defined by the formula:

$$R_m{}^{B1} = \frac{\int_{420}^{450} R(\lambda)d\lambda}{450-420}$$

wherein $R(\lambda)$ represents the reflection factor at a given wavelength $\lambda$. $R_m{}^{B1}$ is defined for a specific angle of incidence, based on $R(\lambda)$ measured at the same angle of incidence.

The mean reflection factor $R_m{}^{B1}$ as defined above is preferably higher than or equal to any one of the following values: 16, 17, 18, 19, 20 %. Ideally, the mean reflection factor $R_m{}^{B1}$ ranges from 16 to 20.5 %, preferably at 15° incident angle.

The present filter is especially designed to maximize the average blue light reflection factor $R_m{}^{B1}$. This makes it possible to maximize the rejection of phototoxic blue light, within the wavelength range of from 420 nm to 450 nm, directly arriving on the front main face of the lens, by depositing the filter preferably on said front face.

In one embodiment, the multilayer antireflection coating provides the at least one main face of the lens onto which it is deposited with an average (or mean) blue light reflection factor $R_m{}^{B1}$, within a wavelength range of from 420 nm to 450 nm, lower than or equal to 40, 35, 30, 25, 22 or 21 %, for an angle of incidence ranging from 0° to 15°. In this embodiment, the $R_m{}^{B1}$ reflection factor, while being kept at a level that is sufficient to have a good protection against blue light, is not too high to avoid leading to an undesired yellow color of the resulting optical lens (i.e., a too high colorimetric coefficient b*).

In another embodiment, the antireflection coating according to the invention has a limited reflection of the part of blue light known as chronobiologic blue light responsible for the synchronization of the biological clock (in the range of 465 nm to 495 nm), so as to allow a sufficient amount of this light to reach the eyes of the wearer and not to disturb their circadian rhythm.

It may be particularly desirable in some cases to filter a relatively small portion of the blue light spectrum, i.e., within the 380-450 nm region, preferably the 420 nm - 450 nm or 420 nm - 460 nm region, while preserving the ability to transmit neighboring wavelengths. Indeed, it has been found that blocking too much of the blue spectrum can interfere with scotopic vision and mechanisms for regulating biorhythms, referred to as "circadian cycles". Thus, in a preferred embodiment, the antireflection coating blocks less than 10 %, preferably less than 5 % of light having a wavelength ranging from 465 to 495 nm. In this embodiment, the antireflection coating blocks the phototoxic blue light and efficiently transmits the blue light implicated in circadian rhythms. Preferably, the antireflection coating transmits at least 80, 85 or 90 % of light having a wavelength ranging from 465 to 495 nm (for an angle of incidence on the main face ranging from 0° to 15°). In another embodiment, the antireflection coating does not absorb light in the 465-495 nm range. These requirements are also preferably satisfied by the corresponding optical lens.

In a preferred embodiment, the multilayer antireflection coating provides the at least one main face of the lens onto which it is deposited with an average (or mean) blue light reflection factor $R_m{}^{B2}$ within a wavelength range of from 465 nm to 495 nm that is lower than or equal to 13 %, for an angle of incidence on the main face comprising the filter ranging from 0° to 15°, preferably 15°. It is defined by the formula:

$$R_m{}^{B2} = \frac{\int_{465}^{495} R(\lambda)d\lambda}{495-465}$$

wherein $R(\lambda)$ represents the reflection factor at a given wavelength $\lambda$. $R_m{}^{B2}$ is defined for a specific angle of incidence, based on $R(\lambda)$ measured at the same angle of incidence.

The mean reflection factor $R_m{}^{B2}$ as defined above is preferably lower than or equal to any one of the following values: 12, 10, 9, 8, 7 %.

According to this embodiment, the antireflection coating of the invention has an outstanding selectivity, which enables to protect from the phototoxic blue light band, while preserving at best the circadian cycles by not disturbing the chronobiologic blue light band. Preferably, $R_m{}^{B2}$ is lower than $R_m{}^{B1}$, more preferably at least 1.5 times lower, ideally twice lower.

Preferably, the optical lens transmission factor at 480 nm for an angle of incidence on the main face ranging from 0° to 15° is higher than or equal to 70 %, more preferably higher than or equal to 90 %, and even more preferably higher than or equal to 95 %.

The multilayer antireflection coating provides the at least one main face of the lens onto which it is deposited with average (or mean) blue light reflection factors $R_m{}^{B1}$ and $R_m{}^{B3}$ as defined above such that the ratio $R_m{}^{B1}/R_m{}^{B3}$ is lower than or equal to 1, preferably lower than 1, for an angle of incidence in the range of 0° to 15° (preferably 15°). The relatively lower $R_m{}^{B1}$ as compared to $R_m{}^{B3}$ is a special property of the present filter allowing to avoid obtaining an undesired yellow color of the resulting optical lens. Indeed, at the same level of $R_m{}^{B3}$, a lower ratio of $R_m{}^{B1}/R_m{}^{B3}$ indicates a lower level of yellowness.

Obviously, the ratio $R_m^{B1}/R_m^{B3}$ is defined for $R_m^{B1}$ and $R_m^{B3}$ reflection factors calculated at the same angle of incidence.

In one embodiment, the ratio $R_m^{B1}/R_m^{B3}$ defined above is higher than or equal to 0.8. Preferably, the requirements for the ratio $R_m^{B1}/R_m^{B3}$ are satisfied for all angles of incidence in the range from 0° to 15°.

Since the present antireflection coating is a narrow band filter that reflects a targeted range of blue light, it has the ability to exhibit a low mean light reflection factor $R_v$ between 380 nm and 780 nm. The "mean light reflection factor," noted $R_v$, also called "luminous reflection", is such as defined in the ISO 13666:1998 standard, and measured in accordance with the ISO 8980-4 standard (for an angle of incidence ranging from 0° to 15°, typically of 15°), i.e., it is the weighted spectral reflection average over the whole visible spectrum between 380 and 780 nm.

The mean light reflection factor $R_v$ of the face of the lens coated of the antireflection coating according to the invention is lower than or equal to 2.5 %, and preferably lower than or equal to any one of the following values: 2, 1.9, 1.6, 1.4, 1.25, 1, 0.9, 0.8 %, for an angle of incidence ranging from 0° to 15°, preferably 15°.

In one embodiment, the optical article provides blue light absorption efficiency combined with NIR (near infrared) radiation cutting efficiency. Near infrared light covers the 780-1400 nm wavelength range.

In this embodiment, the antireflection coating further has high reflection of NIR radiation, providing the lens with additional protection against NIR light.

The present antireflection coating is configured to inhibit transmission of at least part of NIR radiation, by reflection. Thus, it represents a "NIR cut filter" and is useful for protection purposes. By reflection of light in the ranges of wavelengths corresponding to the NIR radiation, potentially harmful light will not reach the eyes of a wearer. This is particularly the case for NIR radiation ranging from 780 nm to 1400 nm, this radiation being believed to be harmful for retina.

Thus, an optical article of the invention, provided with this reflection filter, reduces the harmful NIR global transmission to the retina of a user wearing such an optical article by at least partially blocking its transmission.

The antireflection coating according to this embodiment of the invention shows a reflection band in the NIR range. This is particularly interesting when the coating is positioned on the front face of the lens.

In this embodiment, the multilayer antireflection coating provides the at least one main surface onto which it is deposited with a mean reflection factor in the near infrared region $R_m^{NIR}$ within a wavelength range of from 780 nm to 1400 nm higher than or equal to 10 % or 15 %, for an angle of incidence on said face ranging from 0° (normal incidence) to 15°, preferably 15°, wherein $R_m^{NIR}$ is defined by the following formula in which $R(\lambda)$ represents the reflection factor at wavelength $\lambda$:

$$R_m^{NIR} = \frac{\int_{780}^{1400} R(\lambda)d\lambda}{1400 - 780}$$

$R_m^{NIR}$ is defined for a specific angle of incidence, based on $R(\lambda)$ measured at the same angle of incidence, and is preferably lower than or equal to 20 % or lower than or equal to 16 %.

Protection from phototoxic blue light provided by the optical lens of the invention can be quantified by the blue-violet light protection factor BVC (blue violet cut) within a wavelength range of 400-455 nm, which is based on the transmission factor weighted by the light hazard function $B'(\lambda)$. Such factor is defined through the following relation:

$$BVC = 100 - \frac{\int_{400}^{455} B'(\lambda)T(\lambda)d\lambda}{\int_{400}^{455} B'(\lambda)d\lambda}$$

wherein $T(\lambda)$ represents the lens transmission factor at a given wavelength $\lambda$, measured at an incident angle ranging from 0° to 45°, preferably at 0°, and the weighting function $B'(\lambda)$ represents the light hazard function shown on figure 1 of publication WO 2017/077359, in the name of the Applicant (relative spectral function efficiency), at a given wavelength $\lambda$. Said light hazard function results from work between Paris Vision Institute and Essilor International. It can be seen on this figure that blue light is the most dangerous to human eye around 430 nm. Values of the $B'(\lambda)$ function between 400 and 455 nm with a pitch of 5 nm are given hereunder:

| Wavelength (nm) | Weighting coefficient B'($\lambda$) |
|---|---|
| 400 | 0.1618 |
| 405 | 0.2100 |
| 410 | 0.3263 |

(continued)

| Wavelength (nm) | Weighting coefficient B'($\lambda$) |
| --- | --- |
| 415 | 0.5900 |
| 420 | 0.8496 |
| 425 | 0.9800 |
| 430 | 1.0000 |
| 435 | 0.8400 |
| 440 | 0.6469 |
| 445 | 0.5300 |
| 450 | 0.4237 |
| 455 | 0.3050 |

In a preferred embodiment of the invention, BVC is higher than or equal 20 %, preferably higher than or equal to 25, 30, 34 or 35 %, for an angle of incidence ranging from 0° to 45°, preferably 0°, and more preferably for the angles of incidence of 0°, 15°, 30° and 45 °, and even better for all angles of incidence from 0° to 45°.

In the present description, unless otherwise specified, transmittances/transmissions are measured at the center of the optical article for a thickness ranging from 0.5 to 2.5 mm, preferably 2 mm, at an angle of incidence ranging from 0° to 15°, preferably 0°.

In one embodiment, the optical lens of the invention has an average blue light transmission factor $T_m^{B1}$ within a wavelength range of from 420 nm to 450 nm, which is higher than or equal to 60, 65 or 70 %, for an angle of incidence ranging from 0° to 15° (preferably 0°), wherein $T_m^{B1}$ is defined by the following formula in which $T(\lambda)$ represents the lens transmission factor at a given wavelength $\lambda$:

$$T_m^{B1} = \frac{\int_{420}^{450} T(\lambda) d\lambda}{450 - 420}$$

The average blue light transmission factor $T_m^{B1}$ takes into account all means blocking light between 420 and 450 nm, i.e., both absorption and reflection filters. A higher $T_m^{B1}$ factor is required to minimize yellowness of the optical lens.

In one embodiment, the optical lens of the invention has an average blue light transmission factor $T_m^{B2}$ within a wavelength range of from 465 nm to 495 nm, which is higher than or equal to 80, 85, 87, 90, 92 or 94 %, for an angle of incidence ranging from 0° to 15° (preferably 0°), wherein $T_m^{B2}$ is defined by the following formula in which $T(\lambda)$ represents the optical article transmission factor at a given wavelength $\lambda$:

$$T_m^{B2} = \frac{\int_{465}^{495} T(\lambda) d\lambda}{495 - 465}$$

A higher $T_m^{B2}$ factor is required to maximize transmission of chronobiologic blue light by the optical article.

In one embodiment, the optical lens of the invention has an average blue light transmission factor $T_m^{B3}$ within a wavelength range of from 440 nm to 460 nm, which is lower than or equal to 85, 80 or 79 %, for an angle of incidence ranging from 0° to 15° (preferably 0°), wherein $T_m^{B3}$ is defined by the following formula in which $T(\lambda)$ represents the lens transmission factor at a given wavelength $\lambda$:

$$T_m^{B3} = \frac{\int_{440}^{460} T(\lambda) d\lambda}{460 - 440}$$

A lower $T_m^{B3}$ factor is required to maximize protection against LED blue light.

In one embodiment, the optical article according to the invention does not absorb in the visible or not much, which means, in the context of the present application, that its relative light transmission factor in the visible spectrum Tv is higher than or equal to any one of the following values: 87 %, 88 %, 89 %, 90 %, 92 %, 94 %, 95 %, 96 %. Said Tv factor preferably ranges from 87 % to 98.5 %, more preferably from 87 % to 97 %, even better from 90 % to 96.5 %. In another embodiment, Tv ranges from 89 % to 98 %, preferably from 90 % to 98 %, better 94 % to 97 %.

The Tv factor, also called "luminous transmission" of the system, is such as defined in ISO standard 13666:1998 and is measured accordingly to standard ISO 8980-3. It is defined as the average in the 380-780 nm wavelength range that is weighted according to the sensitivity of the eye at each wavelength of the range and measured under D65 illumination conditions (daylight).

In the present application, the spectral reflectivity of the optical lens, for a given angle of incidence of the face comprising the filter, represents the variation of the reflectivity (i.e., reflection factor) at this angle of incidence depending on the wavelength. The reflectivity curve/spectrum does correspond to a schematic illustration of the reflectivity, in which reflectivity is plotted as ordinate and wavelength as abscissa. The reflectivity may be measured by means of a spectrophotometer, for example a spectrophotometer Perkin Elmer Lambda 850 fitted with URA (Universal Reflectance Accessory), which provides a reflection spectrum.

According to the invention, the spectral reflectivity curve of the multilayer antireflection coating, for an angle of incidence ranging from 0° to 15°, preferably 15°, has a reflection peak centered at a wavelength higher than or equal to 435 nm and lower than or equal to 450 nm.

Said reflection peak is preferably centered at a wavelength higher than or equal to 437 nm or 429 nm. Said reflection peak is preferably centered at a wavelength lower than or equal to 449 nm or 447 nm.

Due to the definition of the present filter, said reflection peak extends at least in the 440-460 nm range.

Preferably, the spectral reflectivity curve of said multilayer antireflection coating for an angle of incidence ranging from 0° to 15° has a maximum reflectivity at a wavelength higher than or equal to 435 nm and lower than or equal to 450 nm. Preferably, said maximum reflectivity is at a wavelength higher than or equal to 437 nm or 429 nm. Preferably, said maximum reflectivity is at a wavelength lower than or equal to 449 nm or 447 nm.

As used herein, having a reflection peak in a range of wavelengths means that the maximum of the peak falls within this range.

As can be seen on figures 1-3, the spectral reflectivity curves of the lenses of the invention, generally have, within the wavelength range of from 380 nm to 530 nm, a "bell form" which can be characterized through its height (maximum reflectivity) and its full width at half maximum (FWHM).

According to the invention, the above defined reflection peak exhibits a full width at half maximum (FWHM) lower than or equal to 90 nm, preferably lower than or equal to 80 nm. Said full width at half maximum of said reflection peak is preferably higher than or equal to 40 nm, and preferably ranges from 45 nm to 80 nm.

The full width at half maximum is a well-known measure of bandwidth for filters. Its definition is λhigh - λlow, where λhigh and λlow occur on each side of the reflection peak wavelength, where the reflection is (maximum peak reflection - baseline reflection)/2. The maximum reflection of a filter defines the center of the band filter.

Considering the low full width at half maximum of its reflection peak centered in the 435-450 nm range (≤ 90 nm), the present antireflection filter, combined with the lens substrate, is a narrow band filter preferably in the 400-510 nm range and a high pass filter preferably above 510 nm. A high-pass filter attenuates transmission of light wavelengths below a cutoff wavelength, allowing higher light wavelengths to pass through the filter.

According to the invention, the above defined reflection peak has a maximum reflectivity lower than or equal to 30 %, preferably lower than or equal to 27, 26, 25 or 23 %. This characteristic allows to obtain a good aesthetic appearance of the lens in combination with a high level of retinal protection against harmful blue light. For a similar level of overall protection against blue light, if the maximum reflectivity of the reflection peak is too high, the ability to protect against LED light emission by digital devices is reduced while the yellow level of the lens and mean reflection in the visible range are increased.

According to the invention, the curve of the spectral reflectivity of the multilayer antireflective coating for an angle of incidence in the range of 0° to 15° has a local minimum of reflectivity located within a wavelength range from 380 nm to 420 nm which is lower than or equal to any one of the following values: 2 %, 1.5 %, 1 %, 0.9 %, 0.6 %, 0.4 %, 0.2 %, 0.1 %. This characteristic contributes to lower down the rising side of the above defined reflection peak (left side of the reflection peak below the wavelength of maximum reflectivity) and thus allows to reduce the $R_m{}^{B1}/R_m{}^{B3}$ ratio, by lowering the $R_m{}^{B1}$ factor (measured in the 420-450 nm range) while keeping the same high level of $R_m{}^{B3}$ factor, resulting in lowering down yellowness of the optical lens.

As well known, a local minimum (minimal turning point) on a smooth plane curve is a point where the derivative of the function changes from negative to positive. At this point of the curve, the function's derivative (slope) is zero, i.e., the tangent is horizontal.

The local minimum is not necessarily the global (absolute) minimum of the function. It can also be a relative minimum within a range. In the present case, the reflection curve can have one local minimum which is a global minimum, or several local minima at different wavelengths.

In the present spectral reflection curve, a local minimum of reflectivity is present at a wavelength ranging from 380 nm to 420 nm, preferably from 385 nm to 415 nm or 389 nm to 411 nm.

In some embodiments, the optical lens comprises at least one absorptive optical filtering means that at least partially blocks transmission of blue light having a wavelength ranging from 420 to 460 nm by absorption, to supplement the protection imparted by the present filtering antireflection coating. In the present description, unless otherwise specified, light blocking is defined with reference to an angle of incidence ranging from 0° to 15°, preferably 15°.

In one embodiment, the substrate of the optical lens comprises at least one blue light cutting agent that at least partially blocks light having a wavelength ranging from 400 to 455 or 460 nm, selected from an UV absorber and a blue light absorbing colorant. As used herein, an absorbing colorant may refer to both a pigment and a dye, i.e., can be respectively insoluble or soluble in its vehicle.

Examples of absorbing dyes that can be used as filters in the phototoxic spectral range are described in WO 2013/084177 or WO 2018/054988. Among them, dyes relating to the porphine or porphyrin family are preferred. A preferred absorbing dye is ABS420™, provided by Exciton.

Examples of UV absorbers that at least partially block incident light having a wavelength ranging from 400 to 460 nm are mentioned in WO 2019/211242 and WO 2020/120540.

Preferred absorptive filters have a narrow absorption band in the 420-450 nm range of the electromagnetic spectrum. Ideally, said absorption band is centered on around 420-430 nm. They preferably do not absorb, or very little (typically less than 5%, preferably less than 4%, more preferably, less than 3%, in regions of the visible spectrum outside the 410-450 nm wavelength range.

The colorimetric coefficients of the antireflective stack (C*, h) and the optical article (b*) of the invention in the international colorimetric CIE L*a*b* are calculated between 380 and 780 nm, taking the standard illuminant D65 and the observer into account, for light having an angle of incidence of 15° (unless otherwise indicated), in transmission (for b*) or reflection (for C* and h). The observer is a "standard observer" (10°) as defined in the international colorimetric system CIE L*a*b*.

The optical lens according to the invention preferably has a chroma C* (in reflection) as defined in the CIE (1976) L*a*b* international colorimetric system lower than or equal to 90, 85, 80 or 70 for light having an angle of incidence of 15°, with respect to wearer's comfort viewpoint.

The hue angle (h) of the antireflection coating relates to the residual color displayed by said antireflection coating (color of the reflected light), and preferably ranges from 240° to 325°, preferably from 290° to 310° for light having an angle of incidence of 15°, thus resulting in a perceived residual reflected color blue to violet.

The optical lens according to the invention preferably has a colorimetric coefficient b* (in transmission) as defined in the CIE (1976) L*a*b* international colorimetric system ranging from 10 to 25, preferably 10 to 20, more preferably from 11 to 15, and in a general manner higher or equal to 0. A low colorimetric coefficient b* of the optical article can be correlated with its limited or non-yellow appearance (transmission color). Indeed, positive values on the b* axis indicate amounts of yellow, while negative values indicate amounts of blue.

The invention further relates to a method of manufacturing an optical lens such as described hereabove, comprising:

- providing an optical lens comprising a substrate having a front main face and a rear main face,
- depositing onto at least one main face of the substrate, in this order, optionally a monolayer sub-layer having an exposed surface and a thickness higher than or equal to 120 nm, and a multilayer antireflection coating comprising a stack of at least one high refractive index layer having a refractive index higher than 1.55 and at least one low refractive index layer having a refractive index of 1.55 or less (the refractive indices being expressed for a wavelength of 550 nm), thereby obtaining a coated optical article, and

the multilayer antireflective coating provides said at least one main surface with a mean light reflection factor $R_v$ from 380 nm to 780 nm, defined according to the ISO 13666:1998 standard, lower than or equal to 2.5 %, for an angle of incidence in the range of 0° to 15°, an average reflection factor for blue light $R_m^{B1}$ within a wavelength range of from 420 nm to 450 nm, which is higher than or equal to 15 %, for an angle of incidence in the range of 0° to 15°, an average reflection factor for blue light $R_m^{B3}$ within a wavelength range of from 440 nm to 460 nm, which is higher than or equal to 15 %, for an angle of incidence in the range of 0° to 15°, and a ratio $R_m^{B1}/R_m^{B3}$ lower than or equal to 1 for an angle of incidence in the range of 0° to 15°, the curve of the spectral reflectivity of the multilayer antireflective coating for an angle of incidence in the range of 0° to 15° having a reflection peak centered at a wavelength higher than or equal to 435 nm and lower than or equal to 450 nm and being provided with a maximum reflectivity lower than or equal to 30 %, and a full width at half maximum lower than or equal to 90 nm, and a local minimum of reflectivity located within a wavelength range from 380 nm to 420 nm which is lower than or equal to 2 %.

In one embodiment, the present optical lens is prepared by forming on the substrate a primer coating and/or an abrasion- and/or scratch-resistant coating in a first manufacturing site, while the other coatings are formed in a second manufacturing site.

The following examples illustrate the present invention in a more detailed, but non-limiting manner. Unless stated otherwise, all thicknesses disclosed in the present application relate to physical thicknesses. Unless otherwise specified, the refractive indexes referred to in the present invention are expressed at 20-25°C for a wavelength of 550 nm.

The preferred angle of incidence for each optical parameter is 15°. A study conducted to analyze the incidence range of light in typical screen usage situations on ophthalmic lens wearers revealed that 68 % of the light emitted from screen/digital devices reaches the lens in the incident angular range [10°-30°], and 95 % of the light comes at an incidence below 36°. Therefore, the 15° incident angle is a relevant incidence to consider for light emitted by screen devices.

EXAMPLES

1. General procedures

The articles employed in the examples comprise a 65 mm-diameter polythiourethane MR8® lens substrate (from Mitsui Toatsu Chemicals Inc., refractive index = 1.6), with a power of -2.00 diopters and a thickness of 1.2 mm, coated on its convex main face with the impact resistant primer coating disclosed in the experimental part of WO 2010/109154 modified to have a refractive index of 1.6 by addition of high refractive index colloids, and the abrasion- and scratch-resistant coating (hard coat) disclosed in example 3 of EP 0614957 (modified to have a refractive index of 1.6 rather than 1.5 by adding high refractive index colloids), a multilayer filtering antireflection coating according to the invention, and the antifouling coating disclosed in the experimental section of patent application WO 2010/109154, obtained by evaporation under vacuum of the Optool DSX® compound marketed by Daikin Industries (thickness: from 2 to 5 nm).

The various dielectric layers were deposited without heating the substrates, by vacuum evaporation.

The vacuum evaporation device that made it possible to deposit the various antireflective layers was a vacuum coater BAK from Physimeca having two systems for evaporating materials, an electron gun evaporation system, a thermal evaporator (Joule-effect evaporation system), and a Mark 2+ ion gun from Veeco for use in the preliminary phase of preparation of the surface of the substrate by argon ion bombardment (IPC).

2. Preparation of the optical articles

The lenses were placed on a carrousel provided with circular openings intended to accommodate the lenses to be treated, the concave side facing the evaporation sources and the ion gun.

The method for producing optical articles comprised introducing the lens substrate provided with the primer and abrasion-resistant coatings into a vacuum deposition chamber, conducting a pumping step until a high vacuum was created, and then applying the same treatment conditions as in WO 2020/104392 for successively evaporating the required number of layers (antireflection coating layers, antifouling coating, etc.).

Examples 1 to 8, comparative 1 (C1) and comparative 2 (C2) respectively differ from examples 1A to 8A, comparative 1A (C1A) and comparative 2A (C2A) by the deposition on the concave (back) face of the lens of the same impact resistant primer coating and abrasion- and scratch-resistant coating as the convex (front) face, and an antireflective coating having a low reflection in the UV range made of the following stack designed to have the following properties (the reflection factor Ruv is defined in the application WO 2012/076714):

| Substrate + Primer/hard coat | |
|---|---|
| $SiO_2$ | 36.9 nm |
| $ZrO_2$ | 7.0 nm |
| $SiO_2$ | 150.8 nm |
| $ZrO_2$ | 14.2 nm |
| $SiO_2$ | 31.2 nm |
| $ZrO_2$ | 89.0 nm |
| $SnO_2$ | 6.5 nm |
| $SiO_2$ | 72.4 nm |

| | | |
|---|---|---|
| Rv (%) | 15° | 0.64 |
| Rm (400-700nm) (%) | 15° | 0.96 |

(continued)

| Ruv (%) | 30° | 2.10 |
| | 45° | 2.69 |

3. Testing methods

The following test procedures were used to evaluate the optical articles prepared according to the present invention. Several samples for each system were prepared for measurements and the reported data were calculated with the average of the different samples.

Transmission curves for the lenses coated with the stack of the invention were recorded on a Cary 60 spectrophotometer from Agilent in intervals of 1 nm. The colorimetric components of hue angle h, chroma C* and b* of the lens measured in transmission were analyzed in the international colorimetric CIE (L*, a*, b*) space, taking into account the standard illuminant D65, and the standard observer 10°. Transmission properties, including BVC, $T_m^{B1}$ and $T_m^{B3}$, were measured at an angle of incidence of 0°.

Reflection curves for the lenses coated with the stack of the invention were recorded on an UltraScan PRO from HunterLab in intervals of 1 nm. The colorimetric components of hue angle h, and chroma C* of the lens measured in reflection were analyzed in the international colorimetric CIE (L*, a*, b*) space, taking into account the standard illuminant D65, and the standard observer 10°. Reflection properties, including $R_v$, $R_m^{B1}$, $R_m^{B2}$, $R_m^{B3}$, $R_m^{NIR}$, FWHM, maximum and minimum reflectivity, were computed from the same measurement, in reflection for an angle of incidence of 15°.

4. Results

The structural characteristics and the optical performances of the ophthalmic lenses obtained in the examples are detailed hereunder.

Comparative examples 1 and 3 present antireflection coatings prepared according to the teaching of WO 2013/171434. Comparative example 2 presents an antireflection coating prepared according to the teaching of WO 2022/258793.

| Example 1 | |
| --- | --- |
| Substrate + primer/hard coat | |
| $TiO_2$ | 27.8 nm |
| $SiO_2$ | 29.6 nm |
| $TiO_2$ | 58.2 nm |
| $SiO_2$ | 41.6 nm |
| $TiO_2$ | 22.8 nm |
| $SiO_2$ | 62.9 nm |
| $TiO_2$ | 28.2 nm |
| $SiO_2$ | 36.4 nm |
| $TiO_2$ | 43.2 nm |
| $SnO_2$ | 6.5 nm |
| $SiO_2$ | 107 nm |
| Top coat | |
| h (°) reflection | 307 |
| C* reflection | 78 |
| LI/HI ratio $R_{T1}$ | 1.54 |
| Total thickness* | 464 nm |

| Example 2 | |
|---|---|
| | |
| Substrate + primer/hard coat | |
| $TazO_5$ | 40.2 nm |
| $SiO_2$ | 35.1 nm |
| $TazO_5$ | 52.1 nm |
| $SiO_2$ | 61.9 nm |
| $TazO_5$ | 22.2 nm |
| $SiO_2$ | 73.8 nm |
| $TazO_5$ | 27 nm |
| $SiO_2$ | 51 nm |
| $TazO_5$ | 43.7 nm |
| $SnO_2$ | 6.5 nm |
| $SiO_2$ | 116.3 nm |
| Top coat | |
| h (°) reflection | 301 |
| C* reflection | 66.6 |
| LI/HI ratio $R_{T1}$ | 1.826 |
| Total thickness | 530 nm |

| Example 3 | |
|---|---|
| | |
| Substrate + primer/hard coat | |
| $ZrO_2$ | 48.9 nm |
| $SiO_2$ | 42.3 nm |
| $ZrO_2$ | 48.5 nm |
| $SiO_2$ | 62.8 nm |
| $ZrO_2$ | 38.7 nm |
| $SiO_2$ | 46.2 nm |
| $ZrO_2$ | 39 nm |
| $SiO_2$ | 52.6 nm |
| $ZrO_2$ | 45.8 nm |
| $SnO_2$ | 6.5 nm |
| $SiO_2$ | 120.7 nm |
| Top coat | |
| h (°) reflection | 299 |
| C* reflection | 63.8 |
| LI/HI ratio $R_{T1}$ | 1.47 |
| Total thickness | 552 nm |

| Example 4 | |
|---|---|
| | |
| Substrate + primer/hard coat | |
| $TiO_2$ | 32.7 nm |
| $SiO_2$ | 28.6 nm |
| $TiO_2$ | 49.3 nm |
| $SiO_2$ | 35.5 nm |
| $TiO_2$ | 26.1 nm |
| $SiO_2$ | 46.5 nm |
| $TiO_2$ | 27.3 nm |
| $SnO_2$ | 6.5 nm |
| $SiO_2$ | 119.1 nm |
| Top coat | |
| h (°) reflection | 302 |
| C* reflection | 68.8 |
| LI/HI ratio $R_{T1}$ | 1.696 |
| Total thickness* | 371 nm |

| Example 5 | |
|---|---|
| | |
| Substrate + primer/hard coat | |
| $TazO_5$ | 50.2 nm |
| $SiO_2$ | 27.1 nm |
| $TazO_5$ | 48.9 nm |
| $SiO_2$ | 54.6 nm |
| $TazO_5$ | 20.8 nm |
| $SiO_2$ | 50.3 nm |
| $TazO_5$ | 34.2 m |
| $SnO_2$ | 6.5 nm |
| $SiO_2$ | 118.8 nm |
| Top coat | |
| h (°) reflection | 297 |
| C* reflection | 63.5 |
| LI/HI ratio $R_{T1}$ | 1.628 |
| Total thickness | 411 nm |

| Example 6 | |
|---|---|
| | |
| Substrate + primer/hard coat | |
| $ZrO_2$ | 59 nm |

(continued)

| Substrate + primer/hard coat | |
|---|---|
| SiO$_2$ | 34.6 nm |
| ZrO$_2$ | 43.2 nm |
| SiO$_2$ | 68 nm |
| ZrO$_2$ | 19.4 nm |
| SiO$_2$ | 43.5 nm |
| ZrO$_2$ | 44 nm |
| SnO$_2$ | 6.5 nm |
| SiO$_2$ | 117 nm |
| Top coat | |
| h (°) reflection | 294 |
| C* reflection | 59.7 |
| LI/HI ratio R$_{T1}$ | 1.589 |
| Total thickness | 435 nm |

| Example 7 | |
|---|---|
| | |
| Substrate + primer/hard coat | |
| TiO$_2$ | 120.1 nm |
| SiO$_2$ | 56.7 nm |
| TiO$_2$ | 9.4 nm |
| SiO$_2$ | 68.4 nm |
| TiO$_2$ | 15.8 nm |
| SnO$_2$ | 6.5 nm |
| SiO$_2$ | 120.2 nm |
| Top coat | |
| h (°) reflection | 302 |
| C* reflection | 67.4 |
| LI/HI ratio R$_{T1}$ | 1.668 |
| Total thickness | 397 nm |

| Example 8 | |
|---|---|
| | |
| Substrate + primer/hard coat | |
| Nb$_2$O$_5$ | 120.2 nm |
| SiO$_2$ | 56.9 nm |
| Nb$_2$O$_5$ | 8.9 nm |
| SiO$_2$ | 70.6 nm |
| Nb$_2$O$_5$ | 15.4 nm |
| SnO$_2$ | 6.5 nm |

(continued)

| Substrate + primer/hard coat | |
|---|---|
| SiO$_2$ | 122 nm |
| Top coat | |
| h (°) reflection | 301 |
| C* reflection | 66 |
| LI/HI ratio R$_{T1}$ | 1.727 |
| Total thickness | 400 nm |

| Comparative example 1 | |
|---|---|
| | |
| Substrate + primer/hard coat | |
| ZrO$_2$ | 40.6 nm |
| SiO$_2$ | 33.7 nm |
| ZrO$_2$ | 59.4 nm |
| SnO$_2$ | 6.5 nm |
| SiO$_2$ | 114.8 nm |
| | |
| | |
| Top coat | |
| h (°) reflection | 311 |
| C* reflection | 64 |
| LI/HI ratio R$_{T1}$ | 1.485 |
| Total thickness | 255 nm |

| Comparative example 2 | |
|---|---|
| | |
| Substrate + primer/hard coat | |
| ZrO$_2$ | 40.2 nm |
| SiO$_2$ | 48.1 nm |
| ZrO$_2$ | 53.3 nm |
| SiO$_2$ | 39.8 nm |
| ZrO$_2$ | 94.7 nm |
| SnO$_2$ | 6.5 nm |
| SiO$_2$ | 99.1 nm |
| Top coat | |
| h (°) reflection | 308 |
| C* reflection | 85 |
| LI/HI ratio R$_{T1}$ | 0.994 |
| Total thickness | 382 nm |

| Comparative example 3 | |
|---|---|
| | |
| Substrate + primer/hard coat | |
| ZrO$_2$ | 34 nm |
| SiO$_2$ | 35 nm |
| ZrO$_2$ | 73 nm |
| SiO$_2$ | 110 nm |
| | |
| | |
| | |
| | |
| Top coat | |
| h (°) reflection | 309 |
| C* reflection | 64 |
| LI/HI ratio R$_{T1}$ | 1.36 |
| Total thickness | 252 nm |

Table 1: Reflection properties of the lenses prepared.

| Example | R$_m$B1 (%) | R$_m$B2 (%) | R$_m$B3 (%) | Rv (%) | R$_m$NIR (%) | R$_m$B1 / R$_m$B3 | λmax peak | Max reflection peak (%) | FWHM (nm) | λmin local minimum (380-420 nm) | Local min reflection (%) |
|---|---|---|---|---|---|---|---|---|---|---|---|
| 1 | 19.85 | 6.25 | 20.16 | 0.60 | 15.93 | 0.985 | 439 nm | 22.94 | 47 nm | 411 nm | 0.11 |
| 2 | 17.08 | 9.73 | 20.45 | 0.95 | 10.64 | 0.835 | 447 nm | 21.23 | 54 nm | 410 nm | 0.03 |
| 3 | 17.09 | 10.85 | 20.46 | 1.11 | 5.69 | 0.835 | 447 nm | 21.10 | 57 nm | 408 nm | 0.03 |
| 4 | 19.91 | 9.27 | 19.99 | 0.96 | 4.34 | 0.996 | 440 nm | 21.73 | 59 nm | 403 nm | 0.11 |
| 5 | 20.35 | 11.26 | 20.37 | 1.31 | 7.76 | 0.999 | 439 nm | 21.47 | 71 nm | 394 nm | 0.16 |
| 6 | 19.95 | 12.04 | 19.98 | 1.54 | 8.88 | 0.998 | 440 nm | 20.99 | 76 nm | 389 nm | 0.08 |
| 7 | 19.93 | 9.84 | 19.99 | 1.13 | 14.67 | 0.997 | 440 nm | 21.44 | 64 nm | 398 nm | 0.96 |
| 8 | 19.94 | 10.37 | 19.99 | 1.19 | 15.82 | 0.997 | 440 nm | 21.31 | 66 nm | 395 nm | 0.56 |
| C1 | 13.23 | 2.58 | 8.48 | 0.66 | | 1.559 | 358 nm | 35.80 | 105 nm | | |
| C2 | 27.08 | 7.19 | 19.94 | 0.78 | | 1.358 | 403 nm | 36.13 | 87 nm | | |
| C3 | 11.8 | 2.3 | 8.71 | 0.5 | | 1.355 | 364 nm | 30.30 | 98 nm | | |

Table 2: Transmission properties of the lenses prepared.

| Example | Tv (%) | $T_m^{B1}$ (%) | $T_m^{B2}$ (%) | $T_m^{B3}$ (%) | BVC (B') | b* | C* | h (°) | YI |
|---|---|---|---|---|---|---|---|---|---|
| 1A | 96.07 | 74.48 | 90.73 | 77.59 | 37 | 12.19 | 13.7 | 117 | 17.1 |
| 2A | 95.65 | 78.03 | 86.88 | 78.45 | 34 | 11.92 | 13.1 | 115 | 17.1 |
| 3A | 95.45 | 77.99 | 85.66 | 78.49 | 34 | 12.09 | 13.2 | 114 | 17.5 |
| 4A | 95.66 | 74.20 | 87.89 | 78.20 | 37 | 12.54 | 13.8 | 115 | 18.0 |
| 5A | 95.22 | 73.99 | 85.89 | 78.11 | 38 | 12.84 | 13.9 | 112 | 18.9 |
| 6A | 94.93 | 74.34 | 85.08 | 78.53 | 38 | 12.66 | 13.6 | 111 | 18.9 |
| 7A | 95.55 | 74.58 | 87.69 | 78.77 | 37 | 12.29 | 13.6 | 115 | 17.6 |
| 8A | 95.46 | 74.57 | 87.13 | 78.78 | 38 | 12.38 | 13.6 | 115 | 17.8 |
| C1A | 96.13 | 78.23 | 95.22 | 88.76 | 36 | 7.43 | 8.9 | 123 | 10.1 |
| C2A | 95.80 | 65.29 | 89.61 | 76.45 | 46 | 14.74 | 16.4 | 116 | 20.8 |
| C3A | | 84.6 | | 90.4 | 26 | 6.10 | | | |
| C* and h in this table are transmission data. | | | | | | | | | |

The reflection spectra of the different coatings are shown on figures 1-3 and the transmission spectra of the different lenses are shown on figures 4-6. The antireflection coatings according to the invention have low mean light reflection factors in the visible range $R_v$, and therefore exhibit high transparency properties. Meanwhile, these coatings also have high $R_m^{B1}$ ($\geq$ 17 %), $R_m^{B3}$ ($\geq$ 20 %) reflection factors and blue-violet light protection factors BVC, due to the high reflection peak in the 435-450 nm range, indicating an effective protection against phototoxic blue light and particularly against LED blue light emission from digital devices, without being detrimental to the antireflection performances in the visible region.

Their $T_m^{B3}$ factor is much lower than those of WO 2013/171434 (comparative examples 1, 3), indicating a higher protection against LED blue light emission from digital devices.

Thus, the ophthalmic lenses of the invention enable to prevent a degenerative process of a wearer's eye as a consequence of blue light-induced phototoxicity, such as the age-related macular degeneration.

$R_m^{B2}$ of the present coatings is low, which is chronobiologically desirable.

All the inventive filters are narrow band filters showing a reflection of light in a specific wavelength range, with a reflection peak centered at 435-450 nm and having a FWHM lower than 80 nm, contrary to the comparative filters, which are broad band filters.

The present optical lenses have a much lower $R_m^{B1}$ / $R_m^{B3}$ ratio than the lens of comparative example 2, indicating a lower tendency of the resulting optical lens to exhibit an undesired yellow color, at similar $R_m^{B3}$ levels.

The present optical lenses have a lower colorimetric coefficient b* than those of WO 2022/258793 (comparative example 2), indicating a lower yellow appearance, which aesthetically more pleasant for a user. They also have a lower reflection chroma C* than those of WO 2022/258793, resulting in weaker strength of reflection color, and consequently improving lens aesthetics.

In addition, almost all of the lenses according to the invention have higher $R_{T1}$ ratios than the comparative lenses, and thus higher thermal and mechanical performance.

## Claims

1. An optical lens comprising:

- a substrate having a front main surface and a rear main surface, and
- a multilayer antireflective coating disposed on at least one of the main surfaces and comprising a stack of at least one layer with a refractive index higher than 1.55 and at least one layer with a refractive index of 1.55 or less, the refractive indices being expressed for a wavelength of 550 nm, the curve of the spectral reflectivity of the multilayer antireflective coating for an angle of incidence in the range of 0° to 15° having:
- a reflection peak centered at a wavelength higher than or equal to 435 nm and lower than or equal to 450 nm and being provided with a maximum reflectivity lower than or equal to 30 %, and a full width at half maximum lower than or equal to 90 nm, and

- a local minimum of reflectivity located within a wavelength range from 380 nm to 420 nm which is lower than or equal to 2 %,

the multilayer antireflective coating providing said at least one main surface with the following properties:

- a mean light reflection factor $R_v$ from 380 nm to 780 nm, defined according to the ISO 13666:1998 standard, lower than or equal to 2.5 %, for an angle of incidence in the range of 0° to 15°,
- an average reflection factor for blue light $R_m^{B1}$ within a wavelength range of from 420 nm to 450 nm, higher than or equal to 15 %, for an angle of incidence in the range of 0° to 15°,
- an average reflection factor for blue light $R_m^{B3}$ within a wavelength range of from 440 nm to 460 nm, higher than or equal to 15 %, for an angle of incidence in the range of 0° to 15°, and
- a ratio $R_m^{B1}/R_m^{B3}$ lower than or equal to 1 for an angle of incidence in the range of 0° to 15°.

2. An optical lens according to claim 1, wherein the multilayer antireflective coating provides said at least one main surface with an average blue light reflection factor $R_m^{B2}$, within a wavelength range of from 465 nm to 495 nm, lower than or equal to 13 %, for an angle of incidence in the range of 0° to 15°.

3. An optical lens according to any one of the preceding claims, wherein the ratio $R_m^{B1}/R_m^{B3}$ is higher than or equal to 0.8.

4. An optical lens according to any one of the preceding claims, wherein said multilayer antireflective coating comprises a number of layers lower than or equal to 14, preferably ranging from 4 to 12 and, more preferably ranging from 7 to 11.

5. An optical lens according to any one of the preceding claims, wherein said multilayer antireflective coating has a total thickness lower than or equal to 1 $\mu$m, preferably ranging from 200 nm to 700 nm, more preferably from 250 nm to 560 nm.

6. An optical lens according to any one of the preceding claims, wherein said substrate comprises at least one blue light cutting agent that at least partially blocks light having a wavelength ranging from 400 to 455 nm, selected from an UV absorber and a blue light absorbing colorant.

7. An optical lens according to any one of the preceding claims, wherein said local minimum of reflectivity is located within a wavelength range from 385 nm to 415 nm.

8. An optical lens according to any one of the preceding claims, wherein said local minimum of reflectivity is lower than or equal to 1.5 %, preferably lower than or equal to 1 %.

9. An optical lens according to any one of the preceding claims, wherein said maximum reflectivity of said reflection peak is lower than or equal to 25 %.

10. An optical lens according to any one of the preceding claims, wherein the multilayer antireflective coating provides said at least one main surface with a mean reflection factor in the near infrared region $R_m^{NIR}$ within a wavelength range of from 780 nm to 1400 nm, which is lower than or equal to 20 %, preferably lower than or equal to 16 %, for an angle of incidence ranging from 0° to 15°, wherein $R_m^{NIR}$ is defined by the following formula in which $R(\lambda)$ represents the reflection factor at wavelength $\lambda$:

$$R_m^{NIR} = \frac{\int_{780}^{1400} R(\lambda)d\lambda}{1400-780}$$

11. An optical lens according to any one of the preceding claims, wherein said full width at half maximum of said reflection peak is higher than or equal to 40 nm, and preferably ranges from 45 nm to 80 nm.

12. An optical lens according to any one of the preceding claims, wherein said multilayer antireflective coating has a ratio $R_{T1}$ higher than or equal to 1.45:

$$R_{T1} = \frac{\text{sum of the physical thicknesses of the low refractive index layers of the multilayer antireflective coating}}{\text{sum of the physical thicknesses of the high refractive index layers of the multilayer antireflective coating}}$$

13. An optical lens according to any one of the preceding claims, wherein said average blue light reflection factor $R_m^{B1}$, within a wavelength range of from 420 nm to 450 nm, is lower than or equal to 21 % and preferably ranges from 16 % to 20.5 %.

14. An optical lens according to any one of the preceding claims, wherein said average blue light reflection factor $R_m^{B3}$, within a wavelength range of from 440 nm to 460 nm, is lower than or equal to 22 % and preferably ranges from 18 % to 21 %.

15. An optical lens according to any one of the preceding claims, wherein said mean light reflection factor $R_v$ is lower than or equal to 1,6 %, more preferably lower than or equal to 1 %.

Figure 1

Figure 2

Figure 3

Figure 4

Figure 5

Figure 6

Europäisches
Patentamt

European
Patent Office

Office européen
des brevets

# EUROPEAN SEARCH REPORT

Application Number

**EP 23 30 6670**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 102 264 A1 (ESSILOR INT [FR]) 14 December 2022 (2022-12-14) | 1-5,7-9, 11-13 | INV. G02B1/115 |
| Y | * paragraphs [0115], [0130], [0131], [0135], [0150]; examples 19,21 * | 6,10 | |
| Y | US 2014/300857 A1 (COHEN-TANNOUDJI DENIS [FR] ET AL) 9 October 2014 (2014-10-09) * paragraphs [0020] – [0022] * | 6 | |
| Y | US 2021/116604 A1 (FROMENTIN PIERRE [TH] ET AL) 22 April 2021 (2021-04-22) * paragraph [0026] * | 6 | |
| Y | US 2021/249223 A1 (NAVET BENJAMINE [BE] ET AL) 12 August 2021 (2021-08-12) * figure 3 * | 10 | |
| Y | US 2022/011469 A1 (VALENTI CHRISTOPHE [FR] ET AL) 13 January 2022 (2022-01-13) * paragraph [0015] * | 10 | |
| A | US 2018/224575 A1 (MARCK CHRISTELLE [FR] ET AL) 9 August 2018 (2018-08-09) * paragraph [0116] * | 1-15 | TECHNICAL FIELDS SEARCHED (IPC) G02B G02C |
| A | US 2015/234208 A1 (DE AYGUAVIVES FRANCISCO [FR] ET AL) 20 August 2015 (2015-08-20) * abstract; figures * | 1-15 | |

The present search report has been drawn up for all claims

| Place of search | Date of completion of the search | Examiner |
|---|---|---|
| Munich | 6 March 2024 | Mollenhauer, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 23 30 6670

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | | Publication date | Patent family member(s) | | Publication date |
|---|---|---|---|---|---|
| EP 4102264 | A1 | 14-12-2022 | NONE | | |
| US 2014300857 | A1 | 09-10-2014 | AU | 2012348560 A1 | 17-07-2014 |
| | | | AU | 2016204243 A1 | 14-07-2016 |
| | | | AU | 2018203487 A1 | 07-06-2018 |
| | | | AU | 2020203703 A1 | 25-06-2020 |
| | | | BR | 112014013881 A2 | 13-06-2017 |
| | | | CN | 103998974 A | 20-08-2014 |
| | | | CN | 106842617 A | 13-06-2017 |
| | | | EP | 2602654 A1 | 12-06-2013 |
| | | | JP | 2015507217 A | 05-03-2015 |
| | | | JP | 2019061232 A | 18-04-2019 |
| | | | JP | 2020204785 A | 24-12-2020 |
| | | | KR | 20140104998 A | 29-08-2014 |
| | | | US | 2014300857 A1 | 09-10-2014 |
| | | | WO | 2013084177 A1 | 13-06-2013 |
| US 2021116604 | A1 | 22-04-2021 | BR | 112020022157 A2 | 26-01-2021 |
| | | | CN | 112041368 A | 04-12-2020 |
| | | | EP | 3564286 A1 | 06-11-2019 |
| | | | EP | 3788091 A1 | 10-03-2021 |
| | | | JP | 7438133 B2 | 26-02-2024 |
| | | | JP | 2021522551 A | 30-08-2021 |
| | | | US | 2021116604 A1 | 22-04-2021 |
| | | | WO | 2019211242 A1 | 07-11-2019 |
| US 2021249223 | A1 | 12-08-2021 | CN | 112533882 A | 19-03-2021 |
| | | | EP | 3807227 A1 | 21-04-2021 |
| | | | JP | 2021528347 A | 21-10-2021 |
| | | | US | 2021249223 A1 | 12-08-2021 |
| | | | WO | 2019238868 A1 | 19-12-2019 |
| US 2022011469 | A1 | 13-01-2022 | BR | 112021009279 A2 | 10-08-2021 |
| | | | CN | 113167927 A | 23-07-2021 |
| | | | EP | 3884315 A2 | 29-09-2021 |
| | | | JP | 2022507677 A | 18-01-2022 |
| | | | KR | 20210092737 A | 26-07-2021 |
| | | | US | 2022011469 A1 | 13-01-2022 |
| | | | WO | 2020104388 A2 | 28-05-2020 |
| US 2018224575 | A1 | 09-08-2018 | CN | 107924070 A | 17-04-2018 |
| | | | EP | 3329325 A1 | 06-06-2018 |
| | | | FR | 3039659 A1 | 03-02-2017 |
| | | | US | 2018224575 A1 | 09-08-2018 |
| | | | WO | 2017017374 A1 | 02-02-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 30 6670

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2024

| Patent document cited in search report | | | Publication date | Patent family member(s) | | | Publication date |
|---|---|---|---|---|---|---|---|
| US 2015234208 | A1 | | 20-08-2015 | AU | 2013261571 | A1 | 04-12-2014 |
| | | | | AU | 2013261572 | A1 | 27-11-2014 |
| | | | | AU | 2017203931 | A1 | 06-07-2017 |
| | | | | BR | 112014028470 | A2 | 25-07-2017 |
| | | | | BR | 112014028473 | A2 | 25-07-2017 |
| | | | | CA | 2873596 | A1 | 21-11-2013 |
| | | | | CA | 2873597 | A1 | 21-11-2013 |
| | | | | CN | 104303096 | A | 21-01-2015 |
| | | | | CN | 104321687 | A | 28-01-2015 |
| | | | | EP | 2850484 | A1 | 25-03-2015 |
| | | | | EP | 2850485 | A1 | 25-03-2015 |
| | | | | EP | 3486712 | A1 | 22-05-2019 |
| | | | | EP | 4163707 | A1 | 12-04-2023 |
| | | | | JP | 6267192 | B2 | 24-01-2018 |
| | | | | JP | 6965220 | B2 | 10-11-2021 |
| | | | | JP | 7279112 | B2 | 22-05-2023 |
| | | | | JP | 2015520412 | A | 16-07-2015 |
| | | | | JP | 2015520413 | A | 16-07-2015 |
| | | | | JP | 2019049712 | A | 28-03-2019 |
| | | | | JP | 2021167968 | A | 21-10-2021 |
| | | | | KR | 20150009543 | A | 26-01-2015 |
| | | | | KR | 20150011349 | A | 30-01-2015 |
| | | | | NZ | 701889 | A | 26-08-2016 |
| | | | | RU | 2014148966 | A | 27-06-2016 |
| | | | | TW | 201400916 | A | 01-01-2014 |
| | | | | US | 2015098058 | A1 | 09-04-2015 |
| | | | | US | 2015103310 | A1 | 16-04-2015 |
| | | | | US | 2015234208 | A1 | 20-08-2015 |
| | | | | WO | 2013171434 | A1 | 21-11-2013 |
| | | | | WO | 2013171435 | A1 | 21-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022258793 A
- WO 2008024414 A
- WO 2013171434 A
- EP 2902817 A
- US 2022179237 A
- CN 108132545
- WO 2012076714 A
- US 4689387 A
- US 4775733 A
- US 5059673 A
- US 5087758 A
- US 5191055 A
- WO 2013013929 A
- US 7692855 B
- FR 2943798
- US 2006017011 A
- US 5268781 A

- WO 2020104392 A
- JP 63141001 A
- JP 63087223 A
- US 5015523 A
- US 6503631 B
- EP 0404111 A
- US 5316791 A
- EP 0680492 A
- EP 0614957 A
- US 4211823 A
- WO 2011080472 A
- WO 2017077359 A
- WO 2013084177 A
- WO 2018054988 A
- WO 2019211242 A
- WO 2020120540 A
- WO 2010109154 A

**Non-patent literature cited in the description**

- **KITCHEL E.** The effects of blue light on ocular health. *Journal of Visual Impairment and Blindness*, 2000, vol. 94 (6)

- **GLAZER-HOCKSTEIN et al.** *Retina*, 2006, vol. 26 (1), 1-4
- Thin Film Processes II. Academic Press, 1978